# EUROPEAN PATENT APPLICATION

(11) **EP 3 457 399 A1**
(43) Date of publication of application: **20.03.2019**
(21) Application number: 17795773.5
(22) Date of filing: 03.02.2017
(51) Int. Cl.: G10L 15/28, G06F 3/16, G10L 15/22

(54) **INFORMATION PROCESSING DEVICE, INFORMATION PROCESSING METHOD, AND PROGRAM**

(30) Priority: 13.05.2016 JP 2016097003
(71) Applicant: Sony Corporation, Tokyo 108-0075 (JP)
(72) Inventor: FUKUNAGA, Daisuke, Tokyo 108-0075 (JP); TANAKA, Yoshiki, Tokyo 108-0075 (JP); SUGANUMA, Hisahiro, Tokyo 108-0075 (JP)
(74) Representative: MFG Patentanwälte Meyer-Wildhagen Meggle-Freund Gerhard PartG mbB
(86) International application number: PCT/JP2017/004063
(87) International publication number: WO 2017/195412

(57) **Abstract**

[Object] To propose an information processing device, an information processing method, and a program capable of performing processing adaptively to a state of a collected sound.

[Solution] An information processing device including an acquisition unit configured to acquire a suitability degree calculated on a basis of a sound collected by a sound collection unit, and a processing unit configured to perform processing on a basis of the suitability degree acquired by the acquisition unit.

## Description

### Technical Field

The present disclosure relates to an information processing device, an information processing method, and a program.

### Background Art

Conventionally, various techniques related to sound recognition have been proposed. In sound recognition, sound generated by a user is able to be converted into text.

For example, Patent Literature 1 below describes a technique in which a cloud-based application performs sound recognition on a sound command generated by a user and performs processing corresponding to sound recognition results.

### Citation List

### Patent Literature

Patent Literature 1: JP 2014-507030T

### Disclosure of Invention

### Technical Problem

However, in the technique described in Patent Literature 1, the same processing is performed regardless of a state of collected sound. For example, in the technique described in Patent Literature 1, the processing is not able to be performed differently depending on whether or not the collected sound is suitable for the sound recognition.

Therefore, the present disclosure proposes a new and improved information processing device, information processing method and program capable of performing processing adaptively with respect to a state of a collected sound.

### Solution to Problem

According to the present disclosure, there is provided an information processing device including: an acquisition unit configured to acquire a suitability degree calculated on a basis of a sound collected by a sound collection unit; and a processing unit configured to perform processing on a basis of the suitability degree acquired by the acquisition unit.

In addition, according to the present disclosure, there is provided an information processing device including: an acquisition unit configured to acquire a sound collected by a sound collection unit; and a processing unit configured to perform processing corresponding to a suitability degree calculated on a basis of the sound acquired by the acquisition unit.

In addition, according to the present disclosure, there is provided an information processing method including: acquiring a suitability degree calculated on a basis of a sound collected by a sound collection unit; and performing processing on a basis of the acquired suitability degree, with a processor.

In addition, according to the present disclosure, there is provided a program that causes a computer to function as: an acquisition unit configured to acquire a suitability degree calculated on a basis of a sound collected by a sound collection unit; and a processing unit configured to perform processing on a basis of the suitability degree acquired by the acquisition unit.

### Advantageous Effects of Invention

According to the present disclosure as described above, it is possible to perform processing adaptively with respect to a state of a collected sound. Meanwhile, the effects described herein are not necessarily limited and may be effects described in the present disclosure.

### Brief Description of Drawings

FIG. 1 is an explanatory diagram illustrating a configuration example of an information processing system according to a first embodiment.
FIG. 2 is a functional block diagram illustrating a configuration example of a server 20-1 according to the first embodiment.
FIG. 3 is an explanatory diagram illustrating a configuration example of a position change history DB 224 according to the first embodiment.
FIG. 4 is a functional block diagram illustrating a configuration example of a device 10-1 according to the first embodiment.
FIG. 5 is an explanatory diagram illustrating an example of changing a position of a sound collection unit 120 with the device 10-1.
FIG. 6 is a sequence diagram illustrating an operation according to the first embodiment.
FIG. 7 is a flowchart illustrating a flow of "control information generation processing" according to the first embodiment.
FIG. 8 is a functional block diagram illustrating a configuration example of a server 20-2 according to a second embodiment.
FIG. 9 is a functional block diagram illustrating a configuration example of a device 10-2 according to the second embodiment.
FIG. 10 is an explanatory diagram illustrating a configuration example of a position change history DB 128 according to the second embodiment.
FIG. 11 is a sequence diagram illustrating an operation according to the second embodiment.
FIG. 12 is a flowchart illustrating a flow of "processing of changing a position or the like of the sound collection unit" according to the second embodiment.
FIG. 13 is a functional block diagram illustrating a configuration example of a device 10-3 according to a third embodiment.
FIG. 14A is an explanatory diagram illustrating a display example of a display indicating a suitability degree of the position or the like of the sound collection unit according to the third embodiment.
FIG. 14B is an explanatory diagram illustrating a display example of a display indicating a suitability degree of the position or the like of the sound collection unit according to the third embodiment.
FIG. 14C is an explanatory diagram illustrating a display example of a warning display for prompting a position change of the sound collection unit 120 according to the third embodiment.
FIG. 14D is an explanatory diagram illustrating a display example of a warning display for prompting a position change of the sound collection unit 120 according to the third embodiment.
FIG. 15 is a sequence diagram illustrating an operation according to the third embodiment.
FIG. 16 is an explanatory diagram illustrating a configuration example of an information processing system according to a fourth embodiment.
FIG. 17 is a functional block diagram illustrating a configuration example of a device 10-4 according to the fourth embodiment.
FIG. 18 is a sequence diagram illustrating an operation according to the fourth embodiment.
FIG. 19 is a flowchart illustrating a flow of "operation execution processing" according to the fourth embodiment.
FIG. 20 is a flowchart illustrating a flow of a modification example 1 of the "operation execution processing".
FIG. 21 is a flowchart illustrating a flow of a modification example 2 of the "operation execution processing".
FIG. 22 is a flowchart illustrating a flow of a modification example 3 of the "operation execution processing".
FIG. 23 is an explanatory diagram illustrating a hardware configuration example of a device 10 common to each embodiment.
FIG. 24 is an explanatory diagram illustrating an example of a situation in which a plurality of users speak to a robot 10 by a modification example of the present disclosure.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

In the present specification and the drawings, a plurality of configuration elements having substantially the same functional configuration may be distinguished by appending different letters after the same reference numerals in some cases. For example, a plurality of configuration elements having substantially the same functional configuration are distinguished as a device 10a and a device 10b as necessary. However, in a case where it is not necessary to particularly distinguish each of a plurality of configuration elements having substantially the same functional configuration, the same reference numerals only are attached. For example, in a case where it is not necessary to particularly distinguish between the device 10a and the device 10b, the respective device 10a and device 10b are simply referred to as devices 10.

In addition, the "mode(s) for carrying out the invention" will be described according to an order of items shown below.
1. First embodiment
2. Second embodiment
3. Third embodiment
4. Fourth embodiment
5. Hardware configuration
6. Modification example

It is noted that in the present specification and the drawings, a device 10-1, a device 10-2, a device 10-3, and a device 10-4 according to each embodiment that will be described later may be collectively referred to as a device 10 in some cases. Similarly, a server 20-1, a server 20-2, a server 20-3, and a server 20-4 according to each embodiment may be collectively referred to as a server 20.

### «First embodiment»

### <1-1. Configuration of information processing system>

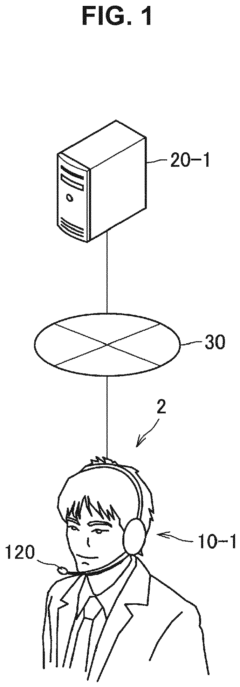

First, the first embodiment of the present disclosure will be described. In the first embodiment, a situation where a user performs a sound input on a sound collection unit 120 is assumed. FIG. 1 is an explanatory diagram illustrating the configuration of the information processing system according to the first embodiment. As shown in FIG. 1, the information processing system according to the first embodiment includes the device 10-1, the server 20-1, and a communication network 30.

### {1-1-1. Server 20-1}

The server 20-1 is an example of an information processing device in the present disclosure. The server 20-1 has a sound recognition function. For example, the server 20-1 performs sound recognition (cloud sound recognition) on sound data received from the device 10-1 through the communication network 30 that will be described later. The server 20-1 transmits sound recognition results to the device 10-1.

### {1-1-2. Device 10-1}

The device 10-1 is an example of the information processing device in the present disclosure. The device 10-1 transmits the sound data collected by a sound collection unit 120 to the server 20-1. For example, the device 10-1 transmits the sound data of speech of a user collected by the sound collection unit 120 to the server 20-1. In addition, the sound collection unit 120 may be provided in the device 10-1, or may be connected to the device 10-1 so as to be able to communicate with the device 10-1 by wired communication or wireless communication.

In addition, the device 10-1 is able to control a change of a position and/or an attitude of the sound collection unit 120.

It is noted that although FIG. 1 shows an example in which the device 10-1 is a headset, the present disclosure is not limited such an example. For example, the device 10-1 may be a device such as a general-purpose personal computer (PC), a tablet type terminal, a mobile phone such as a smartphone, a games machine, a portable music player, an agent device, a robot, a glasses type device such as a head mounted display (HMD), another wearable device such as a wristwatch type device, or the like.

### {1-1-3. Communication network 30}

The communication network 30 is a wired or wireless transmission path for information transmitted from a device connected to the communication network 30. For example, the communication network 30 may include a public line network such as a telephone line network, the Internet, or a satellite communication network, various local area network (LAN) including an Ethernet network (registered trademark), a wide area network (WAN), and the like. In addition, the communication network 30 may include a dedicated line network such as internet protocol-virtual private network (IP-VPN).

It is noted that the configuration of the information processing system according to the first embodiment is not limited to the example described above. For example, although only one server 20-1 is shown in FIG. 1, the configuration of the information processing system according to the first embodiment is not limited to such an example. For example, a function of the server 20-1 that will be described later may be realized by operating a plurality of computers in cooperation. In addition, although only one device 10-1 is shown in FIG. 1, the configuration of the information processing system according to the first embodiment is not limited to such an example and the information processing system may include a plurality of devices 10-1.

### {1-1-4. Summary of problem}

The configuration of the information processing system according to the first embodiment has been described above. Meanwhile, in a case where a positional relationship between the sound collection unit 120 and the user is inappropriate, the sound collection unit 120 is not able to suitably collect the sound of the user. As a result, when the server 20-1 performs the sound recognition on the sound collected by the sound collection unit 120, an accuracy of the sound recognition may decrease. For example, text different from an intention of the user may be obtained as the sound recognition results. In addition, in a case where the server 20-1 performs the sound recognition on an inappropriately collected sound, a processing amount of the sound recognition may increase.

On the other hand, adjusting the position or the attitude of the sound collection unit 120 so as to increase the accuracy of the sound recognition is troublesome for the user. In addition, the position or the attitude of the sound collection unit 120 with respect to the user such that the accuracy of the sound recognition increases is different depending on, for example, a situation for sound around the sound collection unit 120, a type of the sound collection unit 120, or the like. Therefore, it is difficult for the user to specify a suitable position or attitude for the sound collection unit 120.

Therefore, in consideration of the above-described circumstances as one point of view, the device 10-1 and the server 20-1 according to the first embodiment have been created. According to the first embodiment, the server 20-1 receives the sound of the user collected by the sound collection unit 120 from the device 10-1 and transmits control information for changing the position and/or the attitude of the sound collection unit 120 to the device 10-1 according to a suitability degree calculated on the basis of the received sound. In addition, the device 10-1 changes the position and/or the attitude of the sound collection unit 120 on the basis of the control information received from the server 20-1. Therefore, it is possible to automatically adjust the position and/or the attitude of the sound collection unit 120 so that the accuracy of the sound recognition of the sound collected by the sound collection unit 120 is improved.

### <1-2. Configuration>

### {1-2-1. Server 20-1}

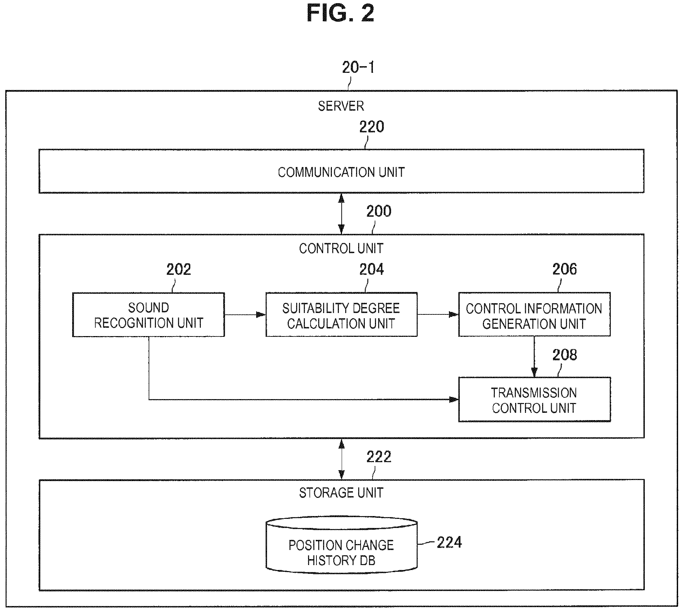

Next, the configuration according to the first embodiment will be described in detail. FIG. 2 is a functional block diagram illustrating a configuration example of the server 20-1 according to the first embodiment. As shown in FIG. 2, the server 20-1 includes a control unit 200, a communication unit 220, and a storage unit 222.

### (1-2-1-1. Control unit 200)

The control unit 200 generally controls an operation of the server 20-1 using hardware such as, for example, a central processing unit (CPU), and a random access memory (RAM) built into the server 20-1. In addition, as shown in FIG. 2, the control unit 200 includes a sound recognition unit 202, a suitability degree calculation unit 204, a control information generation unit 206, and a transmission control unit 208.

### (1-2-1-2. Sound recognition unit 202)

For example, the sound recognition unit 202 recognizes the sound data and the like received from the device 10-1. In addition, the sound recognition unit 202 transfers a sound recognition result to the suitability degree calculation unit 204 and the transmission control unit 208.

### (1-2-1-3. Suitability degree calculation unit 204)

The suitability degree calculation unit 204 calculates the suitability degree on the basis of the sound recognition by the sound recognition unit 202. Here, for example, the suitability degree may be a suitability degree of the position and/or the attitude of the sound collection unit 120 (hereinafter, referred to as the suitability degree of the position or the like of the sound collection unit). Alternatively, the suitability degree may be a suitability degree of the collected sound (for example, a reliability of the sound recognition result of the sound or the like). In addition, in the following, a description will be given centering on an example in which the suitability degree is the suitability degree of the position or the like of the sound collection unit.

For example, the suitability degree calculation unit 204 calculates the suitability degree of the position or the like of the sound collection unit on the basis of a calculation amount when the sound recognition unit 202 performs the sound recognition on the sound data received from the device 10-1, information regarding noise (for example, an amount of the noise or the like) included in the sound data, the reliability of the sound recognition result, and/or the like. For example, the suitability degree calculation unit 204 may calculate the suitability degree so that the suitability degree of the position or the like of the sound collection unit further increases as the calculation amount when performing the sound recognition decreases, as an amount of noise included in the sound data decreases, and as the reliability of the sound recognition result increases. In addition, for example, the calculation amount when the sound recognition unit 202 performs the sound recognition may increase as the amount of noise included in the sound data of a recognition target increases or the amount of text that is a candidate for the recognition results increases.

It is noted that basically, the sound data received from the device 10-1 may be sound of arbitrary speech. However, the present disclosure is not limited to such an example. For example, at an activation of a use of a sound recognition function (for example, at an activation of a sound recognition application implemented in the device 10-1, or the like), the sound data of the speech of a predetermined activation word may be received from the device 10-1. Since the predetermined activation word is text determined in advance, the suitability degree calculation unit 204 is able to more accurately calculate the suitability degree of the position or the like of the sound collection unit than arbitrary speech.

### (1-2-1-4. Control information generation unit 206)

The control information generation unit 206 generates the control information for causing the device 10-1 to change the position and/or the attitude of the sound collection unit 120, on a basis of a comparison between the suitability degree of the position or the like of the sound collection unit calculated by the suitability degree calculation unit 204 and a predetermined threshold value. For example, in a case where the calculated suitability degree of the position or the like of the sound collection unit is equal to or less than the predetermined threshold value, the control information generation unit 206 determines to generate the control information. In addition, in a case where the calculated suitability degree of the position or the like of the sound collection unit is greater than the predetermined threshold value, the control information generation unit 206 determines not to generate the control information.

When determining to generate the control information, the control information generation unit 206 generates the control information on the basis of a history of change of the position or the like of the sound collection unit 120 stored in a position change history DB 224 that will be described later. For example, the control information generation unit 206 may generate the control information on the basis of a comparison between the suitability degree of the position or the like of the sound collection unit calculated at a current time and the suitability degree of the position or the like of the sound collection unit calculated at a previous time, and details of change of the position and/or the attitude of the sound collection unit 120 of the previous time. As an example, in a case where the suitability degree of the position or the like of the sound collection unit calculated at a current time is equal to or greater than the suitability degree of the position or the like of the sound collection unit calculated at a previous time, the control information generation unit 206 generates control information for moving the sound collection unit 120 in the same direction as a movement direction of the previous time. In addition, in a case where the suitability degree of the position or the like of the sound collection unit calculated at a current time is less than the suitability degree of the position or the like of the sound collection unit calculated at a previous time, the control information generation unit 206 generates control information for moving the sound collection unit 120 in a direction opposite to the movement direction of the previous time or a direction shifted from the movement direction of the previous time by a predetermined angle. Here, the control information may be a value indicating a relative movement direction, a movement amount, or an amount of change of the attitude of the sound collection unit 120.

It is noted that when moving the sound collection unit 120 for the first time, that is, in a case where there is no a change history, the control information generation unit 206 may generate control information for moving the sound collection unit 120 in a direction determined in advance.

In addition, the control information generation unit 206 is also able to generate the control information on the basis of identification information of the device 10-1 received from the device 10-1. For example, a table in which the identification information of the device 10-1 and movement conditions (movable direction, amount, and the like) of the sound collection unit 120 are associated with each other may be prepared in advance. In addition, the control information generation unit 206 generates the control information by specifying the movement conditions of the sound collection unit 120, on the basis of the received identification information of the device 10-1 and registration details of the table.

### - Position change history DB 224

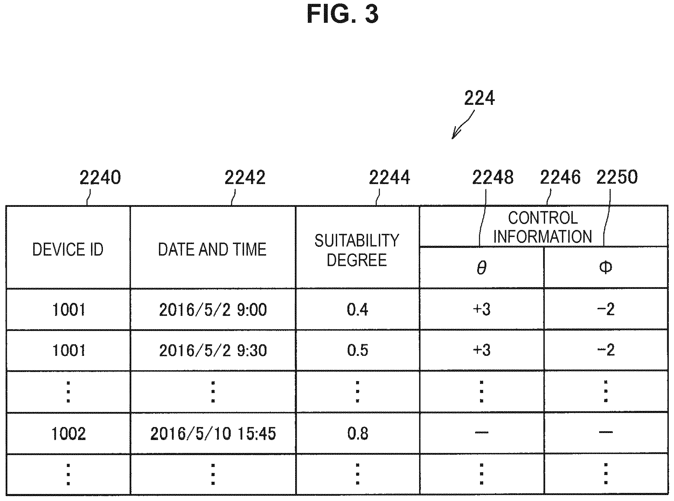

The position change history DB 224 is a database that stores suitability degrees calculated in the past and details of the control information in the past for each sound collection unit 120. FIG. 3 is an explanatory diagram illustrating a configuration example of the position change history DB 224. As shown in FIG. 3, in the position change history DB 224, for example, a device ID 2240, a date and time 2242, a suitability degree 2244, and control information 2246 are associated with each other. Here, in the device ID 2240, the identification information pre-allocated to the device 10-1 that is a transmission source of the sound data is recorded. In addition, in the date and time 2242, the date and time when the suitability degree of the position or the like of the sound collection unit was calculated is recorded in relation to the corresponding device 10-1. In addition, in the suitability degree 2244, the value of the suitability degree of the position or the like of the sound collection unit calculated at the corresponding date and time is recorded in relation to the corresponding device 10-1. In addition, in the control information 2246, the details of the control information generated at the corresponding date and time are recorded in relation to the corresponding device 10-1. It is noted that FIG. 3 shows an example in which the control information is information for changing the position of the sound collection unit using a combination of two kinds of rotation angle (θ, ϕ). However, the present disclosure is not limited to such an example, and for example, the control information may be information for changing the position of the sound collection unit by a combination of movement amounts (x, y, z) in directions of three orthogonal axes.

### (1-2-1-5. Transmission control unit 208)

The transmission control unit 208 is an example of a processing unit in the present disclosure. The transmission control unit 208 controls a transmission of various kinds of information to other devices. For example, the transmission control unit 208 causes the communication unit 220 to transmit the sound recognition result by the sound recognition unit 202 to the corresponding device 10-1. In addition, the transmission control unit 208 causes the communication unit 220 to transmit the control information generated by the control information generation unit 206 to the corresponding device 10-1. In addition, the transmission control unit 208 may causes the communication unit 220 to transmit the control information together with the sound recognition result to the device 10-1. Alternatively, the transmission control unit 208 may cause the communication unit 220 to sequentially transmit only the generated control information to the device 10-1 every time the control information is generated during the sound recognition by the sound recognition unit 202.

### (1-2-1-6. Communication unit 220)

The communication unit 220 is an example of an acquisition unit in the present disclosure. For example, the communication unit 220 performs transmission and reception of information between the communication unit 220 and another device through the communication network 30. For example, the communication unit 220 receives the sound data from the device 10-1. In addition, the communication unit 220 transmits the control information or the sound recognition result to the device 10-1 according to a control of the transmission control unit 208.

### (1-2-1-7. Storage unit 222)

The storage unit 222 stores various kinds of data and various kinds of software. For example, the storage unit 222 stores the position change history DB 224 and the like.

In addition, the configuration of the server 20-1 according to the first embodiment is not limited to the example described above. For example, the position change history DB 224 may be provided in another device (not shown) capable of communicating with the server 20-1, instead of being provided in the server 20-1.

### {1-2-2. Device 10-1}

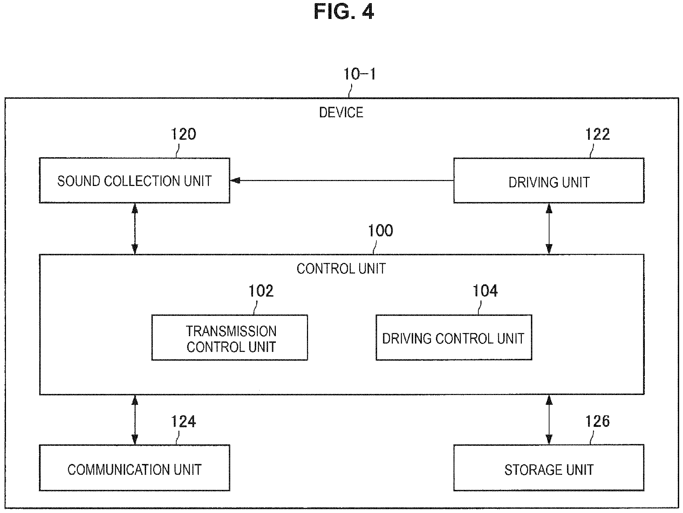

Next, a configuration of the device 10-1 according to the first embodiment will be described. FIG. 4 is a functional block diagram illustrating a configuration example of the device 10-1 according to the first embodiment. As shown in FIG. 4, the device 10-1 includes a control unit 100, the sound collection unit 120, a driving unit 122, a communication unit 124, and a storage unit 126.

### (1-2-2-1. Control unit 100)

The control unit 100 generally controls an operation of the device 10-1 using hardware such as a CPU 150 that will be described later, a RAM 154 built into the device 10-1. In addition, as shown in FIG. 4, the control unit 100 includes a transmission control unit 102 and the driving control unit 104.

### (1-2-2-2. Transmission control unit 102)

The transmission control unit 102 controls a transmission of various kinds of information to other devices. For example, the transmission control unit 102 causes the communication unit 124 to transmit the sound data collected by the sound collection unit 120 and the identification information of the device 10-1 to the server 20-1.

### (1-2-2-3. Driving control unit 104)

The driving control unit 104 is an example of the processing unit in the present disclosure. The driving control unit 104 causes the driving unit 122 to change the position and/or the attitude of the sound collection unit 120 according to the control information received from the server 20-1.

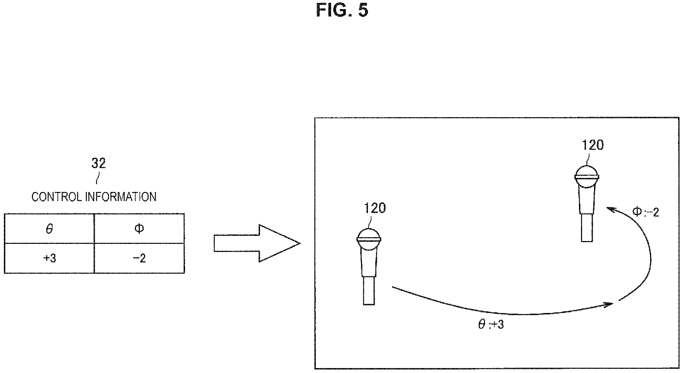

FIG. 5 is an explanatory diagram illustrating an example of changing the position of the sound collection unit 120. In addition, FIG. 5 shows the change example of the position of the sound collection unit 120 in a case where control information 32 is received from the server 20-1. As shown in FIG. 5, the driving control unit 104 controls the driving unit 122 so that the position of the sound collection unit 120 is changed by "+3" in relation to θ and "-2" in relation to ϕ using the position of the current sound collection unit 120 as a reference according to the control information 32.

### (1-2-2-4. Sound collection unit 120)

The sound collection unit 120 detects external sound (air vibration) and converts the external sound into an electric signal. In addition, the sound collection unit 120 transfers the collected sound to the control unit 100.

### (1-2-2-5. Driving unit 122)

The driving unit 122 changes the position and/or the attitude of the sound collection unit 120 according to a control of the driving control unit 104. For example, the driving unit 122 includes an actuator capable of changing the position and/or the attitude of the sound collection unit 120.

### (1-2-2-6. Communication unit 124)

The communication unit 124 is an example of the acquisition unit in the present disclosure. For example, the communication unit 124 performs transmission and reception of information between the communication unit 124 and another device through the communication network 30. For example, the communication unit 124 receives the control information and the sound recognition result from the server 20-1. In addition, the communication unit 124 transmits the sound data and the identification information of the device 10-1 to the server 20-1 according to the control of the transmission control unit 102.

### (1-2-2-7. Storage unit 126)

The storage unit 126 stores various kinds of data or various kinds of software.

### <1-3. Application example>

The configuration according to the first embodiment has been described above. Next, the application example according to the first embodiment will be described. In the present application example, an example in which the device 10-1 is a headset 10-1a including the sound collection unit 120 will be described. In addition, it is assumed that the sound collection unit 120 is able to move only in upper and lower directions (vertical direction).

In a case where the user wears the headset 10-1a, a positional relationship between a mouth of the user and the sound collection unit 120 varies depending on the user. Therefore, depending on the user, when wearing the headset 10-1a, the sound collection unit 120 may be positioned at an inappropriate position in a viewpoint of the accuracy of the sound recognition. According to the present application example, it is possible to automatically adjust the position of the sound collection unit 120 to a position optimum for the user wearing the headset 10-1a.

Specifically, first, in a case where the user gives an arbitrary speech to the sound collection unit 120, the headset 10-1a transmits the sound data collected by the sound collection unit 120 and identification information of the headset 10-1a to the server 20-1.

Then, the server 20-1 performs the sound recognition on the received sound data and calculates the suitability degree of the position or the like of the sound collection unit on the basis of the sound recognition. In addition, the server 20-1 recognizes that the sound collection unit 120 is able to move only in the vertical direction on the basis of the received identification information of the headset 10-1a. In the case where the calculated suitability degree is greater than the predetermined threshold value, the server 20-1 determines not to generate the control information and transmits only the sound recognition result to the corresponding headset 10-1a.

On the other hand, in the case where the calculated suitability degree is equal to or less than the predetermined threshold value, the server 20-1 generates control information for moving the sound collection unit 120 in one of the upper and lower directions on the basis of the change history of the position or the like of the sound collection unit 120 related to the corresponding headset 10-1a stored in the position change history DB 224. For example, in the case where the suitability degree of the position or the like of the sound collection unit calculated at this time is equal to or greater than the suitability degree of the position or the like of the sound collection unit calculated at the previous time, the server 20-1 generates the control information for moving the sound collection unit 120 in the same direction as the movement direction of the previous time. In addition, in a case where the suitability degree of the position or the like of the sound collection unit calculated at this time is less than the suitability degree of the position or the like of the sound collection unit calculated at the previous time, the control information generation unit 206 generates the control information for moving the sound collection unit 120 in the direction opposite to the movement direction of the previous time.

Then, the server 20-1 transmits the generated control information and the sound recognition result to the corresponding headset 10-1a. Then, the headset 10-1a changes the position of the sound collection unit 120 according to the received control information.

In addition, every time the user gives the speech, the server 20-1 and the headset 10-1a repeat the processing described above. Therefore, the headset 10-1a is able to gradually adjust the position of the sound collection unit 120 so that the position of the sound collection unit 120 becomes the position optimum for the user by the user repeating the speech.

### <1-4. Operation>

### {1-4-1. Overall flow of operation}

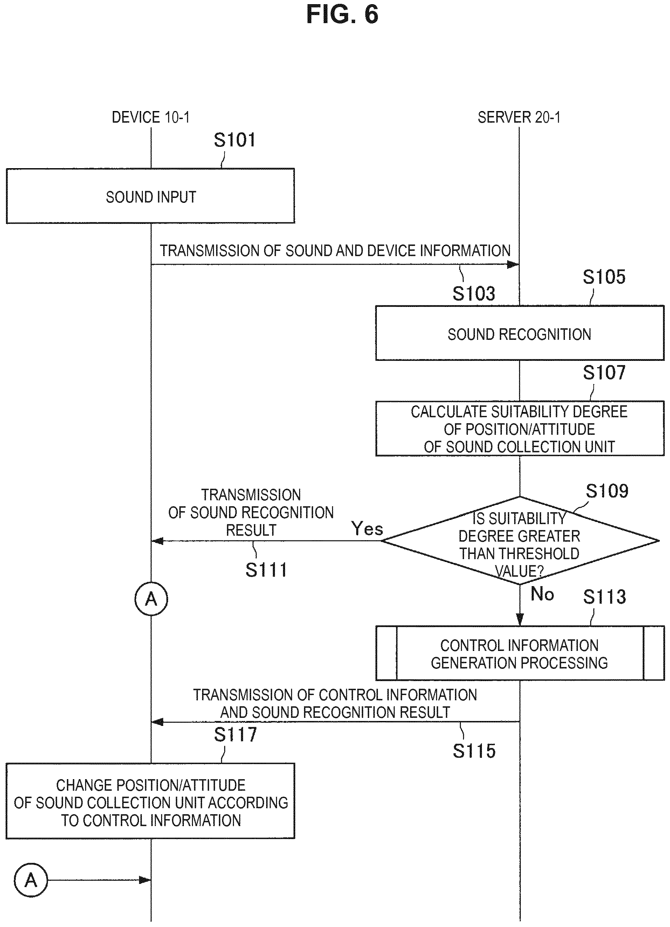

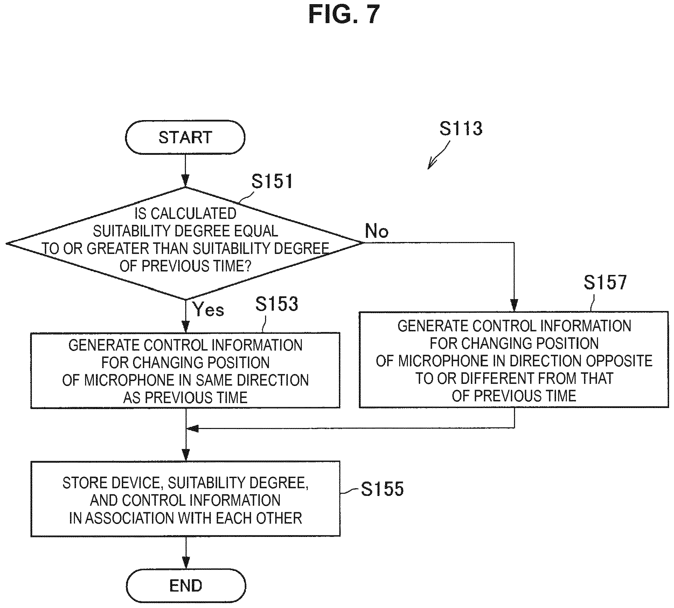

The application example according to the first embodiment has been described above. Next, an operation according to the first embodiment will be described with reference to FIGs. 6 and 7. FIG. 6 is a sequence diagram illustrating the overall flow of the operation according to the first embodiment. In addition, basically, the operation shown in FIG. 6 is executed every time the user gives the speech to the sound collection unit 120.

As shown in FIG. 6, first, the sound collection unit 120 of the device 10-1 collects the sound generated by the user (S101).

Subsequently, the communication unit 124 transmits the sound data collected in S101 and the identification information of the device 10-1 to the server 20-1 according to the control of the transmission control unit 102 (SI03).

Then, the sound recognition unit 202 of the server 20-1 performs the sound recognition on the received sound data (S105). Subsequently, the suitability degree calculation unit 204 calculates the suitability degree of the position or the like of the sound collection unit on the basis of the sound recognition in S105 and a predetermined formula (S107). In addition, the suitability degree calculation unit 204 is able to also calculate the suitability degree of the position or the like of the sound collection unit in the middle of S105.

Subsequently, the control information generation unit 206 determines whether or not the suitability degree calculated in S107 is greater than the predetermined threshold value (S109). In the case where the calculated suitability degree is greater than the predetermined threshold value (S109: Yes), the communication unit 220 transmits only the sound recognition result in S105 to the device 10-1 according to the control of the transmission control unit 208 (Sill). Then, the present processing is ended.

On the other hand, in the case where the calculated suitability degree is equal to or less than the predetermined threshold value (S109: No), the control information generation unit 206 performs "control information generation processing" that will be described later (S113).

Subsequently, communication unit 220 transmits the sound recognition result in S105 and the control information generated in S113 to the device 10-1 according to the control of the transmission control unit 208 (S115).

Then, the driving control unit 104 of the device 10-1 causes the driving unit 122 to change the position and/or the attitude of the sound collection unit 120 according to the received control information (SI17).

### {1-4-2. Control information generation processing}

Here, in S113, a flow of the "control information generation processing" will be described with reference to FIG. 7. As shown in FIG. 7, first, the control information generation unit 206 specifies the suitability degree of the previous time related to the corresponding device 10-1 by referring to the position change history DB 224. The control information generation unit 206 determines whether or not the suitability degree calculated in S107 is equal to or greater than the suitability degree calculated at the previous time (S151). In the case where the suitability degree calculated in S107 is equal to or greater than the suitability degree calculated at the previous time (S151: Yes), the control information generation unit 206 generates the control information for moving the sound collection unit 120 in the same direction as the movement direction of the previous time (S153). In addition, the control information generation unit 206 stores the identification information of the corresponding device 10-1, the suitability degree calculated in S107, and the generated control information in the position change history DB 224 in association with each other (S155).

On the other hand, in S151, in the case where the suitability degree calculated in S107 is less than the suitability degree calculated at the previous time (S151: No), the control information generation unit 206 generates the control information for moving the sound collection unit 120 in the direction opposite to the movement direction of the previous time or the direction shifted from the movement direction of the previous time by the predetermined angle (S157). Then, the control information generation unit 206 performs the processing of S155 described above.

<1-5. Effect>

As described above, according to the first embodiment, the server 20-1 receives the sound of the user collected by the sound collection unit 120 from the device 10-1 and transmits the control information for changing the position and/or the attitude of the sound collection unit 120 to the device 10-1 according to the suitability degree calculated on the basis of the received sound. In addition, the device 10-1 changes the position and/or the attitude of the sound collection unit 120 according to the control information received from the server 20-1. Therefore, it is possible to automatically adjust the position and/or the attitude of the sound collection unit 120 so that the accuracy of the sound recognition of the sound collected by the sound collection unit 120 is improved. For example, the user can suitably adjust the position and/or the attitude of the sound collection unit 120 by simply repeating the speech.

In addition, according to the first embodiment, the device 10-1 is able to suitably change the position and/or the attitude of the sound collection unit 120 only by using the control information received from the server 20-1. Therefore, for example, special processing such as determining a change direction by the device 10-1 itself becomes unnecessary. As a result, power consumption of the device 10-1 is saved.

In addition, according to the first embodiment, since the accuracy of the sound recognition of the sound collected by the sound collection unit 120 is improved, it can be expected that a processing amount of the sound recognition by the server 20-1 decreases.

In addition, according to the first embodiment, it is possible to suitably change the position and/or the attitude of the sound collection unit 120 using only the sound collected by one sound collection unit 120. For example, processing of determining a direction of the user giving the speech by using a sound collection result by a plurality of sound collection units 120 as the publicly known technique, or the like becomes unnecessary. Therefore, it is possible to suitably change the position and/or the attitude of the sound collection unit 120 by a simple hardware configuration compared to the publicly known technique.

### «2. Second embodiment»

The first embodiment has been described above. In the first embodiment, the example in which the server 20-1 generates the control information for changing the position and/or the attitude of the sound collection unit 120 and transmits the control information to the device 10-1 has been described.

Next, the second embodiment will be described. As described later, the device 10-2 according to the second embodiment is able to change the position and/or the attitude of the sound collection unit 120 according to the suitability degree of the position or the like of the sound collection unit received from the server 20-2 according to the second embodiment. In addition, in the following description, description will be given only for contents different from those in the first embodiment, and repetitive description will be omitted.

### <2-1. Configuration>

### {2-1-1. Server 20-2}

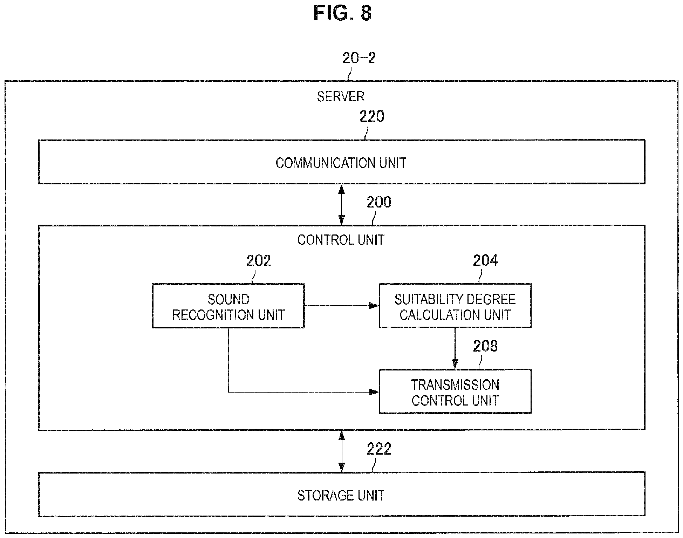

First, the configuration according to the second embodiment will be described in detail. FIG. 8 is a functional block diagram illustrating a configuration example of the server 20-2 according to the second embodiment. As shown in FIG. 8, the server 20-2 does not include the control information generation unit 206 as compared with the server 20-1 (shown in FIG. 2). In addition, in the second embodiment, differently from the first embodiment, basically, the position change history DB 224 is not provided.

### (2-1-1-1. Transmission control unit 208)

The transmission control unit 208 according to the second embodiment causes the communication unit 220 to transmit the suitability degree of the position or the like of the sound collection unit calculated by the suitability degree calculation unit 204 to the corresponding device 10-2. In addition, the transmission control unit 208 may causes the communication unit 220 to transmit the suitability degree of the position or the like of the sound collection unit together with the sound recognition result to the corresponding device 10-1. Alternatively, the transmission control unit 208 may cause the corresponding communication unit 220 to sequentially transmit only the suitability degree of the position or the like of the sound collection unit to the corresponding device 10-1 during processing of the sound recognition by the sound recognition unit 202.

### {2-1-2. Device 10-2}

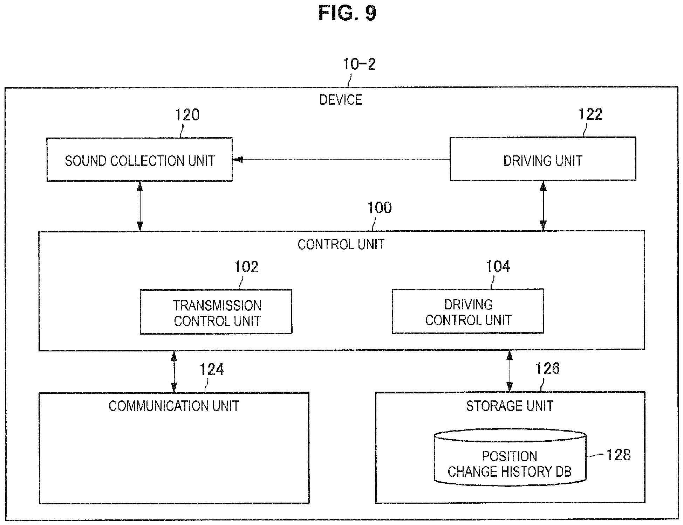

In addition, FIG. 9 is a functional block diagram illustrating a configuration example of the device 10-2 according to the second embodiment. In addition, as shown in FIG. 9, the configuration elements included in the device 10-2 are similar to those included in the device 10-1 (shown in FIG. 4).

### (2-1-2-1. Transmission control unit 102)

Basically, the transmission control unit 102 according to the second embodiment causes the communication unit 124 to transmit only the sound data collected by the sound collection unit 120 to the server 20-2. That is, basically, identification information of the device 10-2 is not transmitted to the server 20-2.

### (2-1-2-2. Driving control unit 104)

The driving control unit 104 according to the second embodiment causes the driving unit 122 to change the position and/or the attitude of the sound collection unit 120 on the basis of the comparison between the suitability degree of the position or the like of the sound collection unit and the predetermined threshold value received from the server 20-2. For example, in the case where the received suitability degree of the position or the like of the sound collection unit is equal to or less than the predetermined threshold value, the driving control unit 104 determines to cause the driving unit 122 to change the position and/or the attitude of the sound collection unit 120. In addition, in the case where the received suitability degree of the position or the like of the sound collection unit is greater than the predetermined threshold value, the driving control unit 104 determines to cause the driving unit 122 not to change the position and/or the attitude of the sound collection unit 120.

In addition, when determining to change the position or the like of the sound collection unit 120, the driving control unit 104 causes the driving unit 122 to change the position and/or the attitude of the sound collection unit 120 on the basis of the change history of the position or the like of the sound collection unit 120 stored in a position change history DB 128 that will be described later. For example, the driving control unit 104 causes the driving unit 122 to change the position and/or the attitude of the sound collection unit 120 on a basis of a comparison between the suitability degree of the position or the like of the sound collection unit received at this time and the suitability degree of the position or the like of the sound collection unit received at a previous time, and a change content of the position and/or the attitude of the sound collection unit 120 of the previous time. As an example, in a case where the suitability degree of the position or the like of the sound collection unit received at this time is equal to or greater than the suitability degree of the position or the like of the sound collection unit received at the previous time, the driving control unit 104 causes the driving unit 122 to move the sound collection unit 120 in the same direction as a movement direction of the previous time. In addition, in a case where the suitability degree of the position or the like of the sound collection unit received at this time is less than the suitability degree of the position or the like of the sound collection unit received at the previous time, the driving control unit 104 causes the driving unit 122 to move the sound collection unit 120 in a direction opposite to the movement direction of the previous time or a direction shifted from the movement direction of the previous time by a predetermined angle.

In addition, when moving the sound collection unit 120 for the first time, that is, in a case where there is no a change history, the driving control unit 104 may cause the driving unit 122 to move the sound collection unit 120 in a direction determined in advance.

### - Position change history DB 128

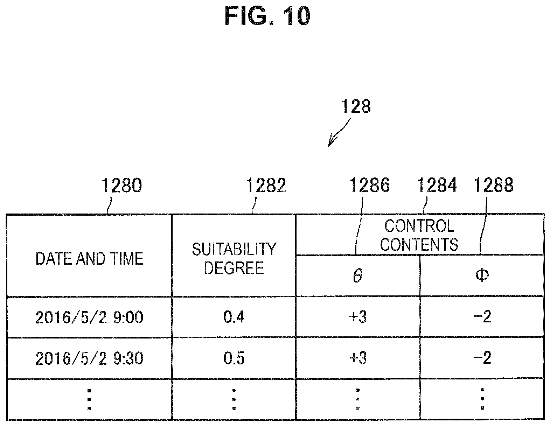

The position change history DB 128 is a database that stores the suitability degree of the position of the sound collection unit or the like received in the past and change contents of the position or the like of the sound collection unit 120. FIG. 10 is an explanatory diagram illustrating a configuration example of the position change history DB 128. As shown in FIG. 10, in the position change history DB 128, for example, date and time 1280, a suitability degree 1282, and control contents 1284 are associated with each other. Here, in the date and time 1280, the date and time when the suitability degree of the position or the like of the sound collection unit was received is recorded. In the suitability degree 1282, the value of the suitability degree of the position or the like of the sound collection unit received at the corresponding date and time is recorded. In addition, in the control contents 1284, control contents executed by the driving control unit 104 at the corresponding date and time are recorded. In addition, the contents recorded in the control contents 1284 may be similar to the control information 2246 shown in FIG. 3.

### <2-2. Application example>

The configuration according to the second embodiment has been described above. Next, the application example according to the second embodiment will be described. In the present application example, (similarly to the application example according to the first embodiment) an example in which the device 10-2 is a headset 10-2a including the sound collection unit 120 and the sound collection unit 120 is able to move only in the vertical direction will be described.

Specifically, first, in a case where the user gives an arbitrary speech to the sound collection unit 120, the headset 10-2a transmits only the sound data collected by the sound collection unit 120 to the server 20-2.

Then, the server 20-2 performs the sound recognition on the received sound data and calculates the suitability degree of the position or the like of the sound collection unit on the basis of the sound recognition. In addition, the server 20-2 transmits the calculated suitability degree and the sound recognition result to the corresponding headset 10-2a.

Then, in a case where the received suitability degree is greater than the predetermined threshold value, the headset 10-2a determines to cause the driving unit 122 not to change the position and/or the attitude of the sound collection unit 120. On the other hand, in a case where the received suitability degree is equal to or less than the predetermined threshold value, the headset 10-2a moves the sound collection unit 120 in one of the upper and lower directions on the basis of the change history of the position or the like of the sound collection unit 120 stored in the position change history DB 128. For example, in the case where the suitability degree of the position or the like of the sound collection unit 120 received at this time is equal to or greater than the suitability degree of the position or the like of the sound collection unit received at the previous time, the headset 10-2a moves the sound collection unit 120 in the same direction as the movement direction of the previous time. In addition, in the case where the suitability degree of the position or the like of the sound collection unit received at this time is less than the suitability degree of the position or the like of the sound collection unit received at the previous time, the headset 10-2a moves the sound collection unit in the direction opposite to the movement direction of the previous time.

In addition, every time the user gives the speech, the server 20-2 and the headset 10-2a repeat the processing described above. Therefore, the headset 10-2a is able to gradually adjust the position of the sound collection unit 120 so that the position of the sound collection unit 120 becomes the position optimum for the user by the user repeating the speech.

### <2-3. Operation>

### {2-3-1. Overall flow of operation}

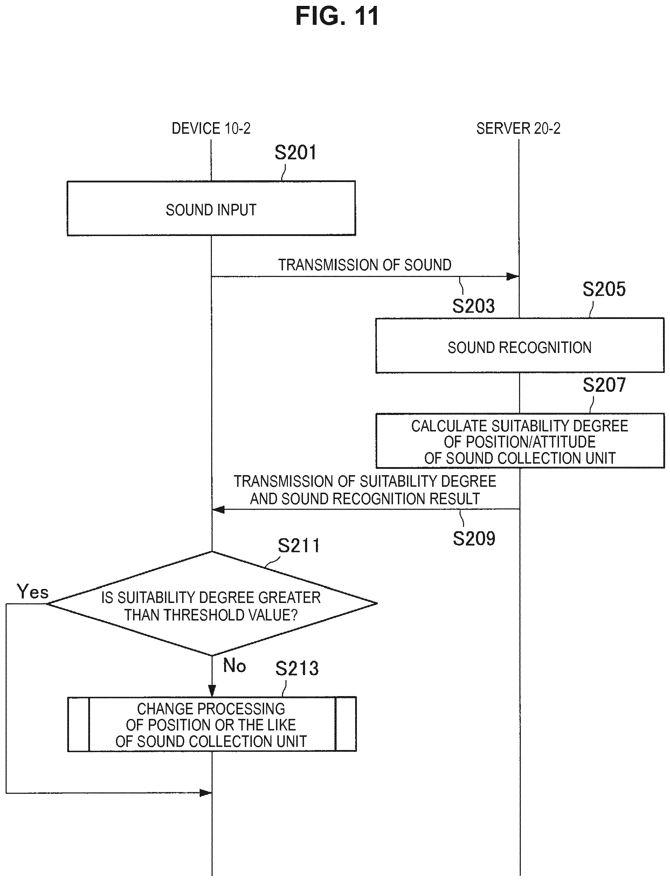

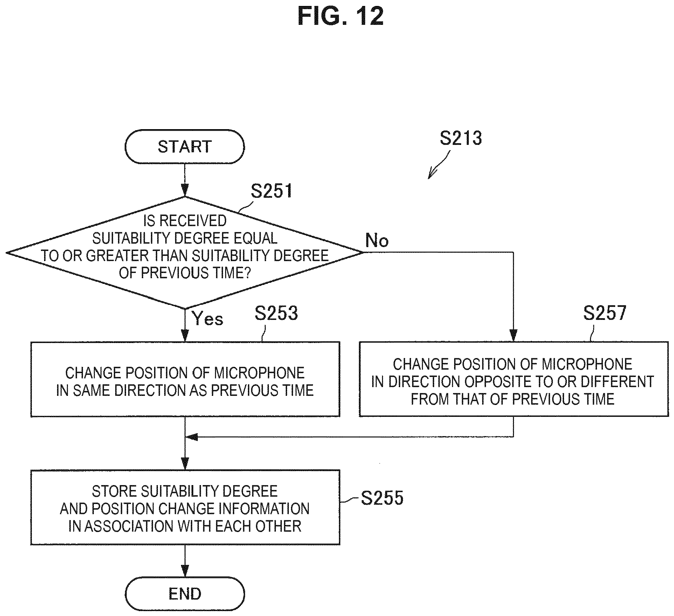

The application example according to the second embodiment has been described above. Next, an operation according to the second embodiment will be described with reference to FIGs. 11 and 12. FIG. 11 is a sequence diagram illustrating the overall flow of the operation according to the second embodiment. In addition, basically, the operation shown in FIG. 11 is executed every time the user gives the speech to the sound collection unit 120. In addition, S201 shown in FIG. 11 is similar to S101 according to the first embodiment (shown in FIG. 6).

After S201, the communication unit 124 of the device 10-1 transmits only the sound data collected by in S201 to the server 20-2 according to the control of the transmission control unit 102 (S203). In addition, S205 to S207 shown in FIG. 11 are similar to S105 to S107 (shown in FIG. 6).

After S207, the communication unit 220 of the server 20-2 transmits the sound recognition result in S205 and the suitability degree of the position or the like of the sound collection unit calculated in S207 to the device 10-2 according to the control of the transmission control unit 208 (S209).

Then, the driving control unit 104 of the device 10-2 determines whether or not the received suitability degree is greater than the predetermined threshold value (S211). In the case where the received suitability degree is greater than the predetermined threshold value (S211: Yes), the device 10-2 ends the present operation.

On the other hand, in the case where the received suitability degree is equal to or less than the predetermined threshold value (S211: No), the driving control unit 104 performs "change processing of the position or the like of the sound collection unit" that will be described later (S213).

### {2-3-2. Change processing of position or the like of sound collection unit}

Here, in S213, a flow of the "change processing of the position or the like of the sound collection unit" will be described with reference to FIG. 12. As shown in FIG. 12, first, the driving control unit 104 specifies the suitability degree received at the previous time by referring to the position change history DB 128. In addition, the driving control unit 104 determines whether or not the suitability degree received in S209 is equal to or greater than the suitability degree received at the previous time (S251). In the case where the suitability degree received in S209 is equal to or greater than the suitability degree received at the previous time (S251: Yes), the driving control unit 104 causes the driving unit 122 to move the sound collection unit 120 in the same direction as the movement direction of the previous time (S253). The driving control unit 104 stores the suitability degree received in S209 and the change contents of the position or the like of the sound collection unit 120 in the position change history DB 128 in association with each other (S255).

On the other hand, in a case where the suitability degree received in S209 is less than the suitability degree received at the previous time (S251: No), the driving control unit 104 causes the driving unit 122 to move the sound collection unit 120 in the direction opposite to the movement direction of the previous time or the direction shifted from the movement direction of the previous time by the predetermined angle (S257). Then, the driving control unit 104 performs the processing of S255 described above.

### <2-4. Effect>

As described above, according to the second embodiment, the server 20-2 receives the sound of the user collected by the sound collection unit 120 from the device 10-2 and transmits the suitability degree calculated on the basis of the received sound to the device 10-2. In addition, the device 10-2 changes the position and/or the attitude of the sound collection unit 120 according to the suitability degree received from the server 20-2. Therefore, it is possible to automatically adjust the position and/or the attitude of the sound collection unit 120 so that the accuracy of the sound recognition of the sound collected by the sound collection unit 120 is improved.

In addition, according to the second embodiment, differently from the first embodiment, it is unnecessary for the server 20-2 to recognize a type of the device 10-2 and to store the calculated suitability degree of the position or the like of the sound collection unit. Therefore, a processing amount of the server 20-2 decreases.

### «3. Third embodiment»

The second embodiment has been described above. As described above, in the first embodiment and the second embodiment, the example in which the device 10-1 or the device 10-2 automatically adjusts the position and/or the attitude of the sound collection unit 120 has been described.

Next, the third embodiment will be described. As described later, the device 10-3 according to the third embodiment is able to display a warning display for prompting the user to change the position and/or the attitude of the sound collection unit 120 or output a warning sound according to the suitability degree of the position or the like of the sound collection unit received from the server 20-3 according to the third embodiment. Therefore, the user can suitably adjust the position and/or the attitude of the sound collection unit 120 so that the accuracy of the sound recognition of the sound collected by the sound collection unit 120 is improved. In addition, in the following description, description will be given only for contents different from those in the second embodiment.

### <3-1. Configuration>

### {3-1-1. Server 20-3}

First, the configuration according to the third embodiment will be described in detail. The configuration of the server 20-3 according to the third embodiment is substantially similar to that of the server 20-2 according to the second embodiment.

### {3-1-2. Device 10-3}

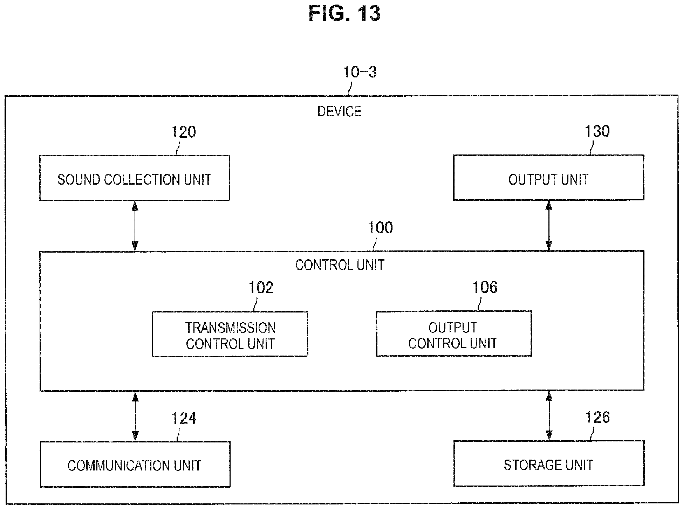

FIG. 13 is a functional block diagram illustrating a configuration example of the device 10-3 according to the third embodiment. As shown in FIG. 13, the device 10-3 further includes an output unit 130 and does not include the driving unit 122 as compared with the device 10-2 shown in FIG. 9.

### (3-1-2-1. Control unit 100)

The control unit 100 according to the third embodiment further includes an output control unit 106 and does not include the driving control unit 104 as compared with the second embodiment (shown in FIG. 9).

### (3-1-2-2. Output control unit 106)

The output control unit 106 is an example of the processing unit in the present disclosure. For example, the output control unit 106 causes the output unit 130 that will be described later to output various kinds of information such as text, an image, and a sound. For example, in a case where the suitability degree of the position or the like of the sound collection unit is received from the server 20-3, the output control unit 106 causes the output unit 130 to output information corresponding to the received suitability degree.

### - Display example 1

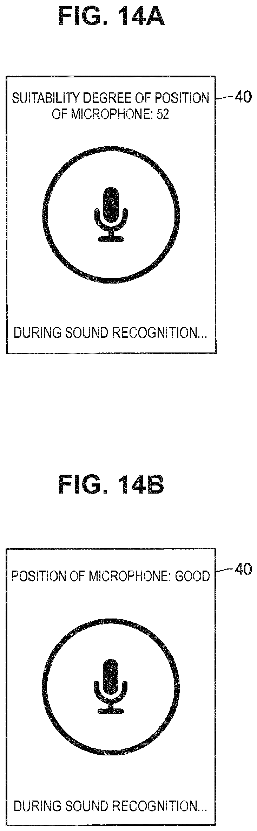

As an example, the output control unit 106 displays the received suitability degree of the position or the like of the sound collection unit on a display screen or causes the output unit 130 to output a sound reading the suitability degree. For example, as shown in FIG. 14A, the output control unit 106 may display text indicating the suitability degree on the display screen. In addition, the output control unit 106 may display the text indicating the suitability degree on the display screen only in the case where the suitability degree is equal to or less than the predetermined threshold value.

Alternatively, the output control unit 106 may display a display indicating a degree of the received suitability degree of the position or the like of the sound collection unit on the display screen. For example, in the case where the suitability degree is greater than the predetermined threshold value, the output control unit 106 may display text indicating "a microphone position is good" on the display screen as shown in FIG. 14B. In addition, in the case where the suitability degree is equal to or less than the predetermined threshold value, the output control unit 106 may display text indicating "the microphone position is bad" on the display screen.

### - Display example 2

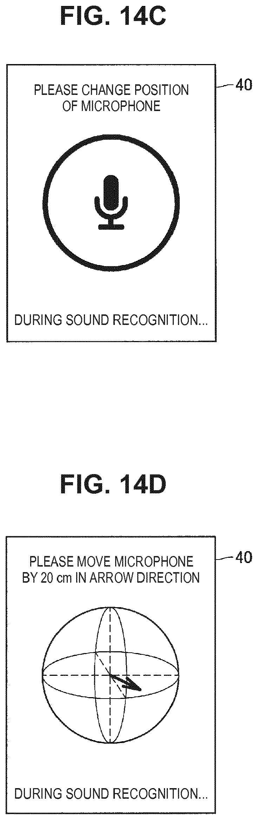

Alternatively, the output control unit 106 is able to also display the warning display on the display screen or cause the output unit 130 to output the warning sound on the basis of the comparison between the received suitability degree of the position or the like of the sound collection unit and the predetermined threshold value. For example, in the case where the suitability degree is equal to or less than the predetermined threshold value, the output control unit 106 displays text for prompting the user to change the position and/or the attitude of the sound collection unit 120 on the display screen as shown in FIG. 14C. In addition, in the case where the suitability degree is greater than the predetermined threshold value, the output control unit 106 does not display the text on the display screen.

### - Display example 3

In addition, as a modification example, the output control unit 106 is able to also display a display indicating a movement recommended direction of the sound collection unit 120 on the display screen (using current position and attitude of the device 10-3 as a reference) on the basis of a measurement result the attitude of the device 10-3 (or a direction in which the sound collection unit 120 is facing) and the change history of the position or the like of the sound collection unit 120. Here, for example, the attitude of the device 10-3 is able to be measured by a gyro sensor, a triaxial acceleration sensor, a geomagnetic sensor, or the like built into the device 10-3. In addition, for example, the change history of the position or the like of the sound collection unit 120 may be stored in the position change history DB 128 stored in the storage unit 126.

More specifically, first, in the case where the suitability degree of the position or the like of the sound collection unit received at this time is equal to or greater than the suitability degree of the position or the like of the sound collection unit received at the previous time, the output control unit 106 determines the movement direction of the previous time of the sound collection unit 120 as the movement recommended direction of the sound collection unit 120. In the case where the suitability degree of the position or the like of the sound collection unit received at this time is less than the suitability degree of the position or the like of the sound collection unit received at the previous time, the output control unit 106 determines the direction opposite to the movement direction of the previous time or the direction shifted from the movement direction of the previous time by the predetermined angle as the movement recommended direction of the sound collection unit 120. In addition, the output control unit 106 displays a display indicating the determined movement recommended direction on the display screen.

For example, in a case where the movement recommended direction of the sound collection unit 120 is determined to be "right", the output control unit 106 may display text such as "please move the microphone 20 cm to the right" on the display screen. Alternatively, for example, as shown in FIG. 14D, the output control unit 106 may display an image of an arrow indicating the movement recommended direction of the sound collection unit 120 (using the current position and attitude of the device 10-3 as the reference) on the display screen.

### (3-1-2-3. Output unit 130)

The output unit 130 displays the display screen or outputs the sound according to the control of the output control unit 106. The output unit 130 includes a display unit that performs the display and a sound output unit that outputs the sound. Here, for example, the display unit includes a display including a liquid crystal display (LCD), an organic light emitting diode (OLED), or the like, a light emitting diode (LED), or the like. In addition, the sound output unit includes a speaker or the like.

### <3-2. Application example>

The configuration according to the third embodiment has been described above. Next, the application example according to the third embodiment will be described. In the present application example, an example in which the device 10-3 is a smartphone 10-3a will be described.

Incidentally, in a situation in which the sound recognition is used using the smartphone 10-3a, in general, the user gives the speech in a state in which the user holds the smartphone 10-3a or in a state in which the user places the smartphone 10-3a on a desk. Therefore, the sound collection unit 120 may be disposed at an inappropriate position from the viewpoint of the accuracy of the sound recognition in some cases. According to the present application example, it is possible to notify the user whether or not the position of the sound collection unit 120 is a position suitable for the sound recognition.

Specifically, first, in a case where the user gives an arbitrary speech to the sound collection unit 120, the smartphone 10-3a transmits only the sound data collected by the sound collection unit 120 to the server 20-3.

Then, the server 20-3 performs the sound recognition on the received sound data and calculates the suitability degree of the position or the like of the sound collection unit on the basis of the sound recognition. The server 20-3 transmits the calculated suitability degree and the sound recognition result to the corresponding smartphone 10-3a.

Then, the smartphone 10-3a compares the received suitability degree with the predetermined threshold value. In addition, in the case where the suitability degree is equal to or less than the predetermined threshold value, the smartphone 10-3a displays the warning display for prompting the user to change the position and/or the attitude of the sound collection unit 120 on the display screen.

In addition, every time the user gives the speech, the server 20-3 and the smartphone 10-3a repeat the processing described above. Therefore, the user can gradually adjust the position of the sound collection unit 120 so that the position of the sound collection unit 120 becomes the position optimum for the user by repeating the speech and an adjustment of a position of the smartphone 10-3a.

### <3-3. Operation>

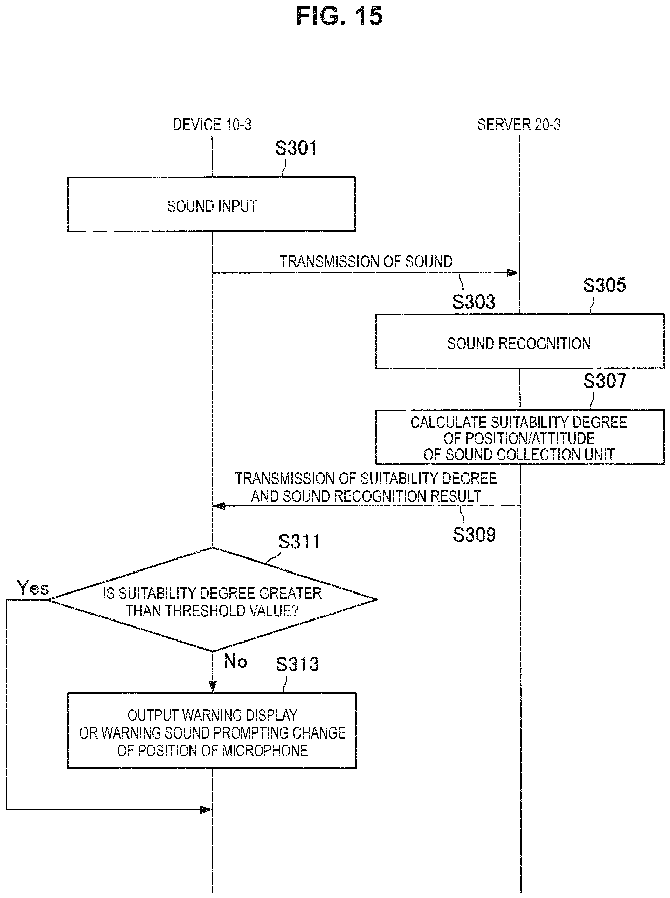

The application example according to the third embodiment has been described above. Next, an operation according to the third embodiment will be described with reference to FIG. 15. FIG. 15 is a sequence diagram illustrating an overall flow of the operation according to the third embodiment. In addition, basically, the operation shown in FIG. 15 is executed every time the user gives the speech to the sound collection unit 120. In addition, S301 to S309 shown in FIG. 15 are similar to S201 to S209 according to the second embodiment (shown in FIG. 11).

After S309, the output control unit 106 of the device 10-3 determines whether or not the suitability degree of the position or the like of the sound collection unit received in step S309 is greater than the predetermined threshold value (S311). In the case where the received suitability degree is greater than the predetermined threshold value (S311: Yes), the device 10-3 ends the present operation.

On the other hand, in the case where the received suitability degree is equal to or less than the predetermined threshold value (S311: No), the output control unit 106 causes the output unit 130 to output the warning display or the warning sound for prompting the user to change the position and/or the attitude of the sound collection unit 120 (S313).

### <3-4. Effect>

As described above, according to the third embodiment, the device 10-3 displays the warning display for prompting the user to change the position and/or the attitude of the sound collection unit 120 or outputs the warning sound according to the suitability degree received from the server 20-3. Therefore, the user can suitably adjust the position and/or the attitude of the sound collection unit 120 so that the accuracy of the sound recognition of the sound collected by the sound collection unit 120 is improved.

### «4. Fourth embodiment»

The third embodiment has been described above. Incidentally, as described above, in a case where the suitability degree of the position or the like of the sound collection unit is low, the accuracy of the sound recognition of the sound collected by the sound collection unit 120 may be decreased. Therefore, in the case where the suitability degree of the position or the like of the sound collection unit is low, when the user is going to perform an operation based on the sound recognition, there is a concern that an operation different from an intention of the user may be executed.

Next, the fourth embodiment will be described. As described later, the device 10-4 according to the fourth embodiment is able to determine whether or not to permit an operation corresponding to the sound recognition result according to the suitability degree of the position or the like of the sound collection unit received from the server 20-4 according to the fourth embodiment. Therefore, in the case where the suitability degree of the position or the like of the sound collection unit is low, that is, in a case where a concern that the sound of the user is erroneously recognized is high, it is possible to suitably limit the operation based on the sound recognition. In addition, in the following description, description will be given only for contents different from those in the second embodiment.

### <4-1. Configuration of information processing system>

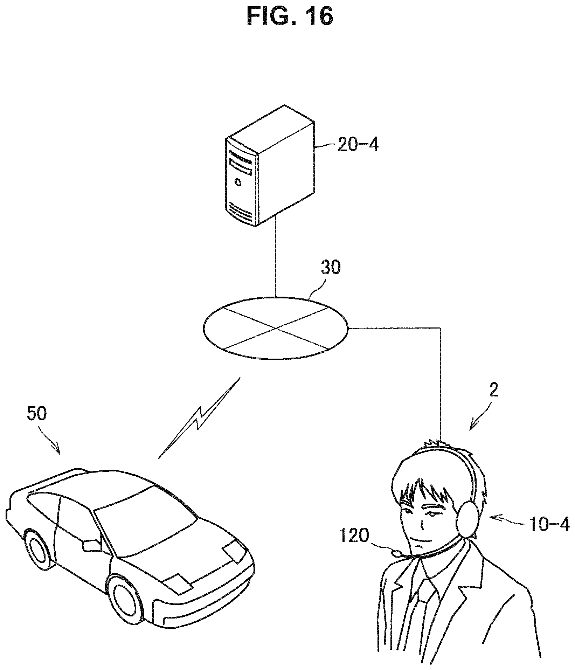

FIG. 16 is an explanatory diagram illustrating the configuration of the information processing system according to the fourth embodiment. As shown in FIG. 16, the information processing system according to the fourth embodiment further includes an external apparatus 50 as compared with the first embodiment (shown in FIG. 1).

### {4-1-1. External apparatus 50}

The external apparatus 50 is an apparatus capable of communicating with the device 10-4 through, for example, the communication network 30. The external apparatus 50 is able to receive instruction information from the device 10-4 and perform processing according to the received instruction information. For example, the external apparatus 50 switches a power source between ON and OFF according to the received instruction information or executes a function instructed by the instruction information.

In addition, FIG. 16 shows an example in which the external apparatus 50 is a vehicle, the present disclosure is not limited such an example. For example, the external apparatus 50 may be a robot (a drone or the like), a household electric appliance (an air conditioner, a lighting device, an electronic lock, a water heater, a stove, or the like), a server (a mail server or the like), a general purpose PC, a tablet type terminal, a mobile phone such as a smartphone, a game machine, a television receiver, or the like.

In addition, FIG. 16 shows an example in which the sound collection unit 120 is included in the device 10-4, but the present disclosure is not limited such an example, and the sound collection unit 120 may be disposed in the external apparatus 50 (inside or outside). In addition, FIG. 16 shows an example in which the user 2 (using the device 10-4) is positioned apart from the external apparatus 50, but the present disclosure is not limited such an example, and the user 2 may be positioned inside the external apparatus 50.

### <4-2. Configuration>

### {4-2-1. Device 10-4}

The configuration of the information processing system according to the fourth embodiment has been described above. Next, the configuration according to the fourth embodiment will be described in detail. In addition, a configuration of the server 20-4 according to the fourth embodiment is substantially similar to that of the server 20-2 according to the second embodiment.

### {4-2-2. Device 10-4}

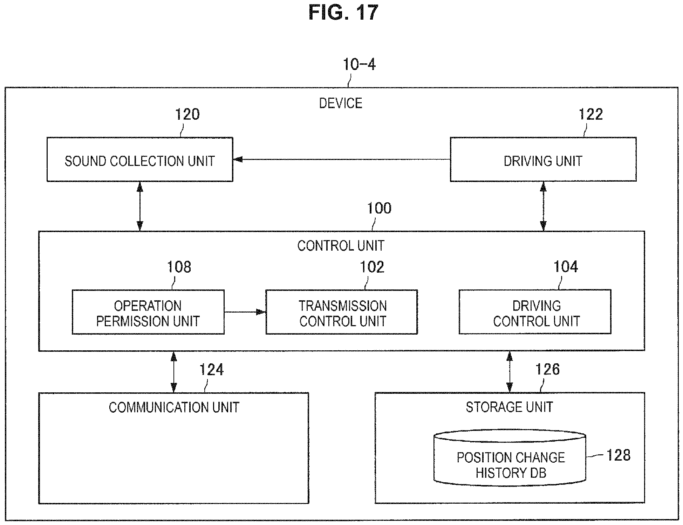

FIG. 17 is a functional block diagram illustrating a configuration example of the device 10-4 according to the fourth embodiment. As shown in FIG. 17, the control unit 100 according to the fourth embodiment further includes an operation permission unit 108 as compared with the second embodiment (shown in FIG. 9).

### (4-2-2-1. Operation permission unit 108)

The operation permission unit 108 is an example of the processing unit in the present disclosure. The operation permission unit 108 determines whether or not to permit an operation specified from the sound recognition result received from the server 20-4 on a basis of a predetermined condition. For example, first, the operation permission unit 108 determines whether or not the sound recognition result received from the server 20-4 includes text of an instruction. In a case where the sound recognition result includes the text of the instruction, the operation permission unit 108 specifies the operation corresponding to the sound recognition result. The operation permission unit 108 determines whether or not to permit an execution of the specified operation on the basis of the comparison between the suitability degree of the position or the like of the sound collection unit received from the server 20-2 and the predetermined threshold value.

### - Determination example 1

For example, the operation permission unit 108 determines whether or not to permit the execution of the operation on the basis of whether or not the specified operation is an operation for the external apparatus 50. As an example, in a case where the specified operation is the operation for the external apparatus 50 and the received suitability degree of the position or the like of the sound collection unit is equal to or less than the predetermined threshold value, the operation permission unit 108 does not permit the operation. In addition, in a case where the received suitability degree of the position or the like of the sound collection unit is greater than the predetermined threshold value and the specified operation is not the operation for the external apparatus 50 (for example, in a case where the specified operation is an operation for the device 10-4), the operation permission unit 108 permits the operation. According to this determination example, in the case where the suitability degree of the position or the like of the sound collection unit is low, the operation for the external apparatus 50 is not executed. Therefore, in the case where the concern that the sound of the user is erroneously recognized is high, it is possible to limit the operation based on the sound recognition for the external apparatus 50.

### - Determination example 2

Alternatively, the operation permission unit 108 determines whether or not to permit the execution of the operation on a basis of whether or not the specified operation is an operation related to a behavior of the external apparatus 50 or the device 10-4 (hereinafter may be referred to as an operation of a control system in some cases). Here, for example, the operation of the control system may include an operation related to acceleration, steering, and braking. For example, in a case where the specified operation is the operation of the control system and the received suitability degree of the position or the like of the sound collection unit is equal to or less than the predetermined threshold value, the operation permission unit 108 does not permit the operation. In addition, in a case where the received suitability degree of the position or the like of the sound collection unit is greater than the predetermined threshold value and the specified operation is an operation other than the control system, the operation permission unit 108 permits the operation.

For example, in a case where the external apparatus 50 is a vehicle 50a, when the operation of the control system is failed, the operation may lead to an accident. On the other hand, for example, regarding music reproduction, a car navigation operation, or the like, even though an operation that is not intended by the user is executed, there is no danger and it is possible to immediately return to an original state. According to the determination example described above, in the case where the suitability degree of the position or the like of the sound collection unit is low, the operation of the control system based on the sound recognition is not executed. Therefore, it is possible to prevent a reduction of safety during travelling of the vehicle 50a. In addition, the operation other than the control system is not limited even in the case where the suitability degree of the position or the like of the sound collection unit is low. Therefore, it is possible to maintain convenience of the user while securing safety.

### - Determination example 3

Alternatively, the operation permission unit 108 determines whether or not to permit the execution of the operation on a basis of whether or not the specified operation is a transmission operation of information addressed to another user (for example, a message or the like in an e-mail, a short message service (SMS), or a social networking service (SNS)). For example, in addition, in a case where the sound recognition result is text "mail transmission or the like", the operation permission unit 108 specifies that the operation corresponding to the sound recognition result is a mail transmission operation.

For example, in a case where the specified operation is the transmission operation of the information addressed to the other user and the received suitability degree of the position or the like of the sound collection unit is equal to or less than the predetermined threshold value, the operation permission unit 108 does not permit the operation. In addition, in a case where the received suitability degree of the position or the like of the sound collection unit is greater than the predetermined threshold value and the specified operation is an operation other than the transmission operation of the information addressed to the other user, the operation permission unit 108 permits the operation.

In general, once information such as an e-mail is transmitted, it is impossible to cancel the transmission. According to this determination example, in the case where the suitability degree of the position or the like of the sound collection unit is low, the information addressed to the other user is not transmitted. Therefore, in the case where in the case where the concern that the sound of the user is erroneously recognized is high, it is possible to limit the transmission operation of the information addressed to the other user based on the sound recognition. For example, it is possible to prevent an e-mail or the like from being transmitted unintentionally by the user or an e-mail or the like from being transmitted to a destination different from a destination that is intended by the user.

### --Modification example

In addition, as a modification example, the operation permission unit 108 is able to determine whether or not to permit the execution of the specified operation on a basis of a comparison among the received suitability degree of the position or the like of the sound collection unit, the first threshold value, and a second threshold value (less than the first threshold value). For example, in a case where the received suitability degree of the position or the like of the sound collection unit is equal to or greater than the first threshold value and is greater than the second threshold value, the operation permission unit 108 may inquire of the user whether or not to execute the specified operation and may determine whether or not to permit the operation on a basis of a response of the user in response to the inquiry. As an example, the operation permission unit 108 performs the inquiry to the user by displaying a UI for the inquiry regarding the execution of the operation on the display screen. In addition, in a case where a response for accepting the execution of the operation is input to the UI, the operation permission unit 108 permits the operation. In a case where a response for refusing the execution of the operation is input to the UI, the operation permission unit 108 does not permit the operation.

According to this modification example, in a case where the suitability degree of the position or the like of the sound collection unit is equal to or less than the second threshold value, the operation corresponding to the sound recognition result is not executed. In addition, in the case where the suitability degree is equal to or greater than the first threshold value and is greater than the second threshold value, the user is caused to confirm whether or not to execute the operation corresponding to the sound recognition result. In addition, in a case where the suitability degree is equal to or greater than the second threshold value, the operation corresponding to the sound recognition result is executed without the confirmation of the user. Therefore, it is possible to suitably limit the operation based on the sound recognition according to the height of the possibility that the sound is erroneously recognized.

### (4-2-2-2. Transmission control unit 102)

In the case where the operation specified by the operation permission unit 108 is the operation for the external apparatus 50, the transmission control unit 102 according to the fourth embodiment is able to cause the communication unit 124 to transmit the instruction information instructing the execution of the operation to the external apparatus 50. For example, only in the case where the operation is permitted by the operation permission unit 108, the transmission control unit 102 may cause the communication unit 124 to transmit the instruction information to the external apparatus 50.

### <4-3. Operation>

### {4-3-1. Overall flow of operation}

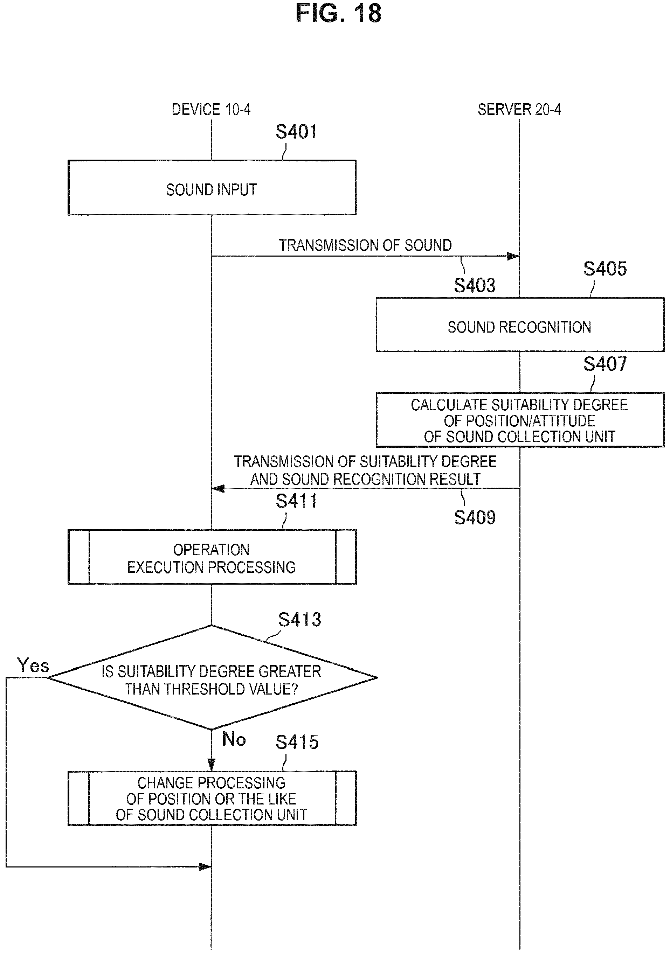

The configuration according to the fourth embodiment has been described above. Next, an operation according to the fourth embodiment will be described with reference to FIG. 18. FIG. 18 is a sequence diagram illustrating an overall flow of the operation according to the fourth embodiment. In addition, basically, the operation shown in FIG. 18 is executed every time the user gives the speech to the sound collection unit 120. In addition, S401 to S409 shown in FIG. 18 are similar to S201 to S209 according to the second embodiment (shown in FIG. 11).

After S409, the device 10-4 performs "operation execution processing" that will be described later (S411).

In addition, S413 to S415 shown in FIG. 18 are similar to the processing of S211 to S213 according to the second embodiment (shown in FIG. 11).

### {4-3-2. Operation execution processing}

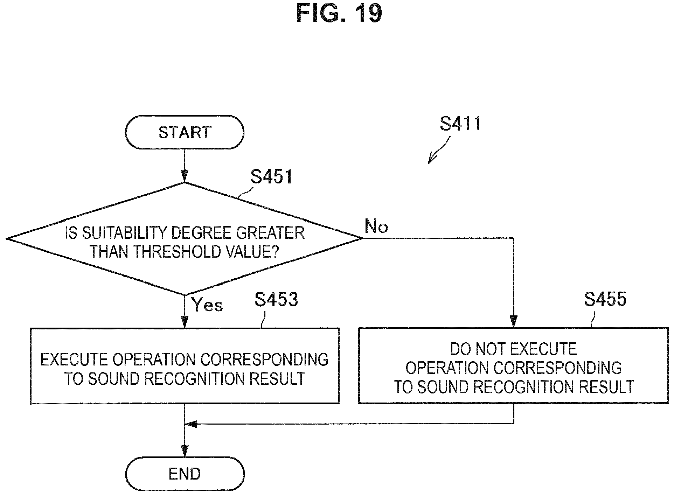

Here, a flow of the "operation execution processing" in S411 will be described with reference to FIG. 19. As shown in FIG. 19, first, the operation permission unit 108 determines whether or not the suitability degree received in S409 is greater than the predetermined threshold value (S451). In the case where the received suitability degree is greater than the predetermined threshold value (S451: Yes), the operation permission unit 108 executes the operation corresponding to the received sound recognition result (S453). On the other hand, in the case where the received suitability degree is equal to or less than the predetermined threshold value (S451: No), the operation permission unit 108 does not execute the operation corresponding to the received sound recognition result (S455).

### {4-3-3. Modification example}

In addition, the operation according to the fourth embodiment is not limited to the example described above. For example, the processing of S413 to S415 may also not be executed. In addition, the "operation execution processing" in S411 is not limited to the example described above, and any one of modification examples (modification examples 1 to 3) described below may be executed instead.

### (4-3-3-1. Modification example 1)

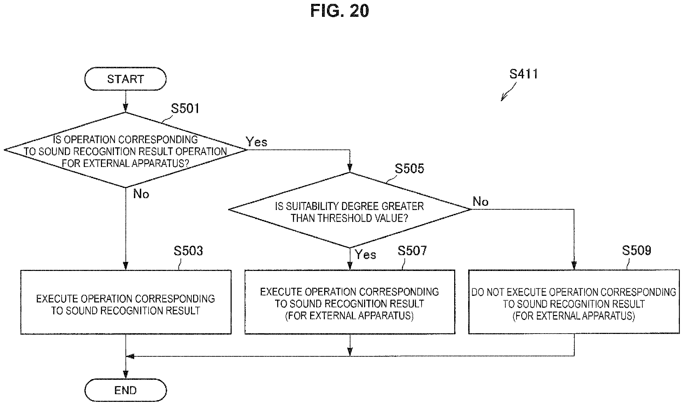

First, the modification example 1 of the "operation execution processing" will be described with reference to FIG. 20. As shown in FIG. 20, first, the operation permission unit 108 specifies the operation corresponding to the received sound recognition result. In addition, the operation permission unit 108 determines whether or not the specified operation is the operation for the external apparatus 50 (S501). In the case where the specified operation is not the operation for the external apparatus 50 (S501: No), the operation permission unit 108 executes the specified operation (S503). In addition, the "operation execution processing" is ended.

On the other hand, in the case where the specified operation is the operation for the external apparatus 50 (S501: Yes), next, the operation permission unit 108 determines whether or not the suitability degree received in S409 is greater than the predetermined threshold value (S505). In the case where the received suitability degree is greater than the predetermined threshold value (S505: Yes), the operation permission unit 108 permits the specified operation. In addition, the communication unit 124 transmits the instruction information instructing the execution of the operation to the external apparatus 50 according to the control of the transmission control unit 102. Then, the external apparatus 50 executes the operation according to the received instruction information (S507). The "operation execution processing" is ended.

On the other hand, in the case where the received suitability degree is equal to or less than the predetermined threshold value (S505: No), the operation permission unit 108 does not permit the specified operation (S509). In addition, the "operation execution processing" is ended.

### (4-3-3-2. Modification example 2)

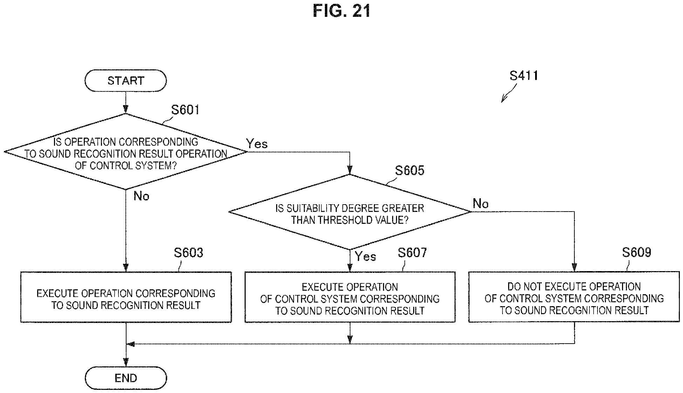

Next, the modification example 2 of the "operation execution processing" will be described with reference to FIG. 21. As shown in FIG. 21, first, the operation permission unit 108 specifies the operation corresponding to the received sound recognition result. In addition, the operation permission unit 108 determines whether or not the specified operation is the operation of the control system for the external apparatus 50 or the device 10-4 (S601). In the case where the specified operation is not the operation of the control system (S601: No), the operation permission unit 108 executes the specified operation (S603). In addition, the "operation execution processing" is ended.

On the other hand, in the case where the specified operation is the operation of the control system (S601: Yes), next, the operation permission unit 108 determines whether or not the suitability degree received in S409 is greater than the predetermined threshold value (S605). In the case where the received suitability degree is greater than the predetermined threshold value (S605: Yes), the operation permission unit 108 permits the specified operation. For example, in the case where the operation is the operation for the external apparatus 50, the device 10-4 transmits the instruction information instructing the execution of the operation to the external apparatus 50, and the external apparatus 50 executes the operation according to the received instruction information. In addition, in the case the operation is the operation for the device 10-4, the device 10-4 executes the operation (S607). In addition, the "operation execution processing" is ended.

On the other hand, in the case where the received suitability degree is equal to or less than the predetermined threshold value (S605: No), the operation permission unit 108 does not permit the specified operation (S609). In addition, the "operation execution processing" is ended.

### (4-3-3-3. Modification example 3)

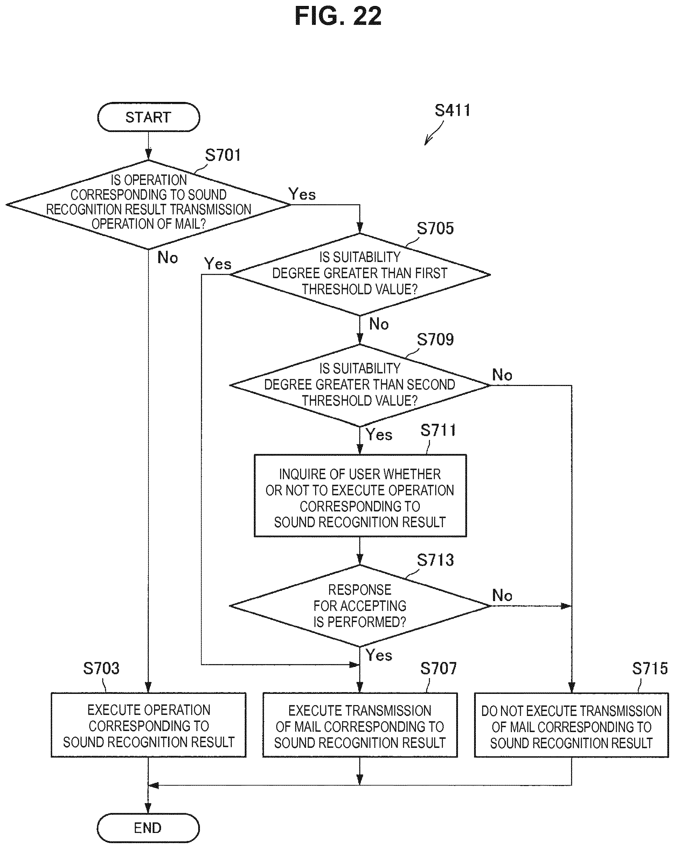

Next, the modification example 3 of the "operation execution processing" will be described with reference to FIG. 22. As shown in FIG. 22, first, the operation permission unit 108 specifies the operation corresponding to the received sound recognition result. In addition, the operation permission unit 108 determines whether or not the specified operation is the transmission operation of the e-mail (S701). In the case where the specified operation is not the transmission operation of the e-mail (S701: No), the operation permission unit 108 executes the specified operation (S703). In addition, the "operation execution processing" is ended.

On the other hand, in the case where the specified operation is the transmission operation of the e-mail (S701: Yes), next, the operation permission unit 108 determines whether or not the suitability degree received in S409 is greater than the first threshold value (S705). In the case where the received suitability degree is greater than the first threshold value (S705: Yes), the operation permission unit 108 permits the specified operation. In addition, the transmission control unit 102 causes the communication unit 124 to transmit the e-mail designated by the operation to the transmission destination designated by the operation (S707). In addition, the "operation execution processing" is ended.

On the other hand, in the case where the received suitability degree is equal to or less than the first threshold value (S705: No), next, the operation permission unit 108 determines whether or not the received suitability degree is greater than the second threshold value (S709). In the case where the received suitability degree is greater than the second threshold value (S709: Yes), the operation permission unit 108 inquiries of the user whether or not to execute the specified operation (S711). In addition, in the case where the response for accepting the execution of the operation is input in response to the inquiry (S713: Yes), the operation permission unit 108 performs the processing from S707 described above.

On the other hand, in the case where a response for refusing the execution of the operation is input in response to the inquiry (S713: No), the operation permission unit 108 does not permit the specified operation (S715). In addition, the "operation execution processing" is ended.

In addition, in S709, in the case where the received suitability degree is equal to or less than the second threshold value (S709: No), the operation permission unit 108 performs the processing from S715 described above.

### <4-4. Effect>

As described above, according to the fourth embodiment, the device 10-4 determines whether or not to permit the operation corresponding to the sound recognition result according to the comparison between the suitability degree of the position or the like of the sound collection unit received from the server 20-4 and the predetermined threshold value. For example, in the case where the suitability degree of the position or the like of the sound collection unit is equal to or less than the predetermined threshold value, the device 10-4 does not permit the execution of the operation based on the sound recognition for the external apparatus 50, the operation of the control system based on the sound recognition, the transmission operation of the information addressed to the other user, or the like. Therefore, in the case where the suitability degree of the position or the like of the sound collection unit is low, that is, in the case where the concern that the sound of the user is erroneously recognized is high, it is possible to suitably limit the operation based on the sound recognition.

In addition, similarly to the second embodiment, the device 10-4 is able to automatically adjust the position and/or the attitude of the sound collection unit 120 so that the suitability degree of the position or the like of the sound collection unit is improved. Therefore, the position and/or the attitude of the sound collection unit 120 is suitably adjusted by the user repeating the speech, and it is also possible to execute the operation based on the limited sound recognition.

### «5. Hardware configuration»

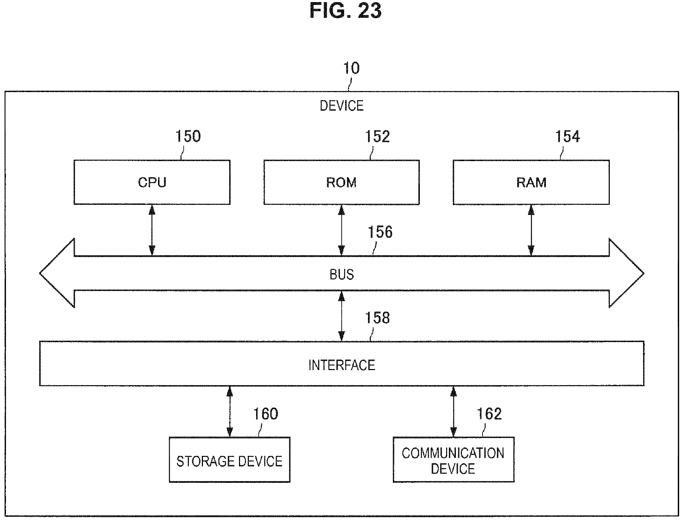

Next, the hardware configuration of the device 10 common to each embodiment will be described with reference to FIG. 23. As shown in FIG. 23, the device 10 includes a CPU 150, a read only memory (ROM) 152, a RAM 154, a bus 156, an interface 158, a storage device 160, and a communication device 162.

The CPU 150 functions as an arithmetic processing device and a control device, and controls the overall operation in the device 10 according to various programs. In addition, the CPU 150 realizes the function of the control unit 100 in the device 10. In addition, the CPU 150 includes a processor such as a microprocessor.

The ROM 152 stores a program used by the CPU 150, control data such as an operation parameter, or the like.

For example, the RAM 154 temporarily stores a program or the like executed by the CPU 150.

The bus 156 includes a CPU bus or the like. The bus 156 mutually connects the CPU 150, the ROM 152, and the RAM 154.

The interface 158 connects the storage device 160 and the communication device 162 to the bus 156.

The storage device 160 functions as the storage unit 126 and is a device for storing data. For example, the storage device 160 includes a storage medium, a recording device that records data in the storage medium, a reading device that reads data from the storage medium, a deletion device that deletes data recorded in the storage medium, or the like.

The communication device 162 is a communication interface including a communication device or the like for connecting an element to, for example, the communication network 30 or the like. In addition, the communication device 162 may be a wireless LAN correspondence communication device, a long term evolution (LTE) correspondence communication device, or a wire communication device performing wired communication. The communication device 162 functions as the communication unit 124.

In addition, a hardware configuration of the server 20 according to each embodiment may also be similar to the hardware configuration described above.

### <<6. Modification example>>

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

### <6-1. Modification example 1>

For example, according to the first embodiment and the second embodiment, basically, an example in which one user uses one device 10 has been described, but the present disclosure is not limited such an example. For example, each embodiment is able to be similarly applied to a situation in which a plurality of users use one device 10. For example, every time one of the plurality of users gives the speech (hereinafter, referred to as a speech user), the server 20 calculates the suitability degree of the position or the like of the sound collection unit on a basis of a sound of the speech user and transmits the calculated suitability degree to the device 10. In addition, the device 10 sequentially changes the position and/or the attitude of the sound collection unit 120 according to the received suitability degree.

### {6-1-1. Application example}

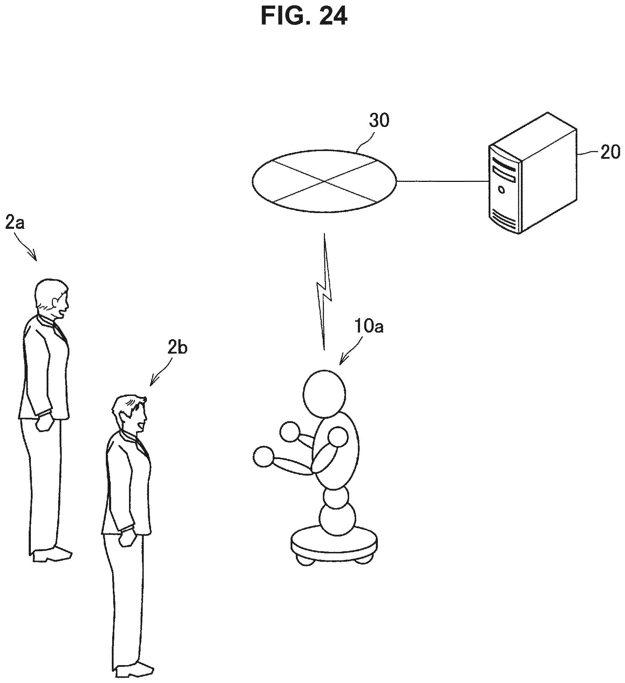

Here, the application example of the present modification example will be described. In this application example, for example, as shown in FIG. 24, suppose a situation in which a plurality of users 2 use a robot 10a (the device 10) capable of performing a dialogue. The robot 10a is able to reply to the speech on a basis of a sound recognition result of a speech of the user 2.

In such a case, since each of positional relationships between the sound collection unit 120 of the robot 10a and each of the users are different from each other, in a state in which the position of the sound collection unit 120 is fixed, it is impossible to suitably collect the sound of some users. According to the present application example, it is possible to sequentially adjust the position and/or the attitude of the sound collection unit 120 so that the sound of the uttered user is able to be suitably collected every time different users give speech.

Specifically, first, in a case where a first user 2a gives the speech, the robot 10a transmits the sound data of the speech to the server 20. In addition, the server 20 performs the sound recognition on the received sound data and calculates the suitability degree of the position or the like of the sound collection unit on the basis of the sound recognition. In addition, the server 20-2 transmits the calculated suitability degree and the sound recognition result to the robot 10a. In addition, the robot 10a changes the position and/or the attitude of the sound collection unit 120 on the basis of the comparison between the received suitability degree and the predetermined threshold value.

In addition, in a case where the dialogue of the user 2a is ended and then a second user 2b gives the speech, the robot 10a changes the position and/or the attitude of the sound collection unit 120 using a direction of the corresponding user 2b as a reference by a similar processing. In this manner, the robot 10a is able to suitably adjust the position and/or the attitude of the sound collection unit 120 in real time according to a situation of the speech of each user.

### <6-2. Modification example 2>

In addition, each step in the operation of each embodiment described above may not necessarily have to be processed in the described sequence. For example, each step may be processed in a suitably changed sequence. In addition, rather than step is processed in chronological sequence, some each of the steps may be processed in parallel or individually. In addition, some of the described steps may be omitted or another step may be further added to the described steps.

In addition, according to each of the embodiments described above, for example, it is also possible to provide a computer program that causes the hardware of the CPU 150, the ROM 152, the RAM 154, and the like to exhibit the equivalent function as each configuration of the device 10 and/or the server 20 according to each of the embodiments described above. A recording medium on which the computer program is recorded is also provided.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing device including:
   an acquisition unit configured to acquire a suitability degree calculated on a basis of a sound collected by a sound collection unit; and
   a processing unit configured to perform processing on a basis of the suitability degree acquired by the acquisition unit.
(2) The information processing device according to (1), in which the suitability degree includes a suitability degree of a position of the sound collection unit.
(3) The information processing device according to (1) or (2), in which the suitability degree includes a suitability degree of an attitude of the sound collection unit.
(4) The information processing device according to (2) or (3), in which the processing unit determines whether or not to perform the processing on a basis of a comparison between the suitability degree and a predetermined threshold value.
(5) The information processing device according to (4), in which the processing is to perform control related to a change of the position of the sound collection unit.
(6) The information processing device according to (4), in which the processing is to control an output of information for prompting a user to change the position of the sound collection unit.
(7) The information processing device according to any one of (1) to (3),
   in which the acquisition unit further acquires a sound recognition result of sound of a user collected by the sound collection unit, and
   the processing unit determines whether or not to permit an operation specified from the sound recognition result, on the basis of the suitability degree.
(8) The information processing device according to (7), further including:
   the sound collection unit,
   in which the processing unit determines whether or not to permit an operation on an external apparatus specified from the sound recognition result, on the basis of the suitability degree.
(9) The information processing device according to (7) or (8), in which the processing unit determines whether or not to permit an operation related to a behavior of the information processing device or an external apparatus specified from the sound recognition result, on the basis of the suitability degree.
(10) The information processing device according to (7), in which the processing unit determines whether or not to permit a transmission operation of information addressed to another user specified from the sound recognition result, on the basis of the suitability degree.
(11) The information processing device according to any one of (7) to (10),
   in which, in a case where the suitability degree is equal to or less than a first threshold value and is greater than a second threshold value, the processing unit inquires of the user whether or not to execute the operation specified from the sound recognition result, and
   the processing unit determines whether or not to permit the operation on a basis of a response of the user in response to the inquiry.
(12) An information processing device including:
   an acquisition unit configured to acquire a sound collected by a sound collection unit; and
   a processing unit configured to perform processing corresponding to a suitability degree calculated on a basis of the sound acquired by the acquisition unit.
(13) The information processing device according to (12), further including:
   a suitability degree calculation unit configured to calculate the suitability degree on a basis of a sound recognition of the sound acquired by the acquisition unit,
   in which the processing unit performs processing corresponding to the suitability degree calculated by the suitability degree calculation unit.
(14) The information processing device according to (13), further including:
   a control information generation unit configured to generate control information for changing a position of the sound collection unit on a basis of the suitability degree,
   in which the processing unit outputs the control information generated by the control information generation unit.
(15) The information processing device according to (14), in which the control information generation unit determines whether or not to generate the control information on a basis of a comparison between the suitability degree and a predetermined threshold value.
(16) The information processing device according to (14) or (15), in which the control information generation unit further generates the control information on a basis of a history of change of the position of the sound collection unit.
(17) The information processing device according to any one of (14) to (16),
   in which the acquisition unit further acquires information regarding an apparatus including the sound collection unit, and
   the control information generation unit further generates the control information on a basis of the information regarding the apparatus acquired by the acquisition unit.
(18) The information processing device according to (13), in which the processing unit causes a communication unit to transmit the suitability degree to an apparatus including the sound collection unit.
(19) An information processing method including:
   acquiring a suitability degree calculated on a basis of a sound collected by a sound collection unit; and
   performing processing on a basis of the acquired suitability degree, with a processor.
(20) A program that causes a computer to function as:
   an acquisition unit configured to acquire a suitability degree calculated on a basis of a sound collected by a sound collection unit; and
   a processing unit configured to perform processing on a basis of the suitability degree acquired by the acquisition unit.

### Reference Signs List

- 10-1, 10-2, 10-3, 10-4: device
- 20-1, 20-2, 20-3, 20-4: server
- 30: communication network
- 50: external apparatus
- 100, 200: control unit
- 102, 208: transmission control unit
- 104: recognition result execution unit
- 106: driving control unit
- 108: output control unit
- 110: operation permission unit
- 120: sound collection unit
- 122: driving unit
- 124, 220: communication unit
- 126, 222: storage unit
- 128, 224: position change history DB
- 130: output unit
- 202: sound recognition unit
- 204: suitability degree calculation unit
- 206: control information generation unit

## Claims

1. An information processing device comprising:
an acquisition unit configured to acquire a suitability degree calculated on a basis of a sound collected by a sound collection unit; and
a processing unit configured to perform processing on a basis of the suitability degree acquired by the acquisition unit.

2. The information processing device according to claim 1, wherein the suitability degree includes a suitability degree of a position of the sound collection unit.

3. The information processing device according to claim 1, wherein the suitability degree includes a suitability degree of an attitude of the sound collection unit.

4. The information processing device according to claim 2, wherein the processing unit determines whether or not to perform the processing on a basis of a comparison between the suitability degree and a predetermined threshold value.

5. The information processing device according to claim 4, wherein the processing is to perform control related to a change of the position of the sound collection unit.

6. The information processing device according to claim 4, wherein the processing is to control an output of information for prompting a user to change the position of the sound collection unit.

7. The information processing device according to claim 1,
wherein the acquisition unit further acquires a sound recognition result of sound of a user collected by the sound collection unit, and
the processing unit determines whether or not to permit an operation specified from the sound recognition result, on the basis of the suitability degree.

8. The information processing device according to claim 7, further comprising:
the sound collection unit,
wherein the processing unit determines whether or not to permit an operation on an external apparatus specified from the sound recognition result, on the basis of the suitability degree.

9. The information processing device according to claim 7, wherein the processing unit determines whether or not to permit an operation related to a behavior of the information processing device or an external apparatus specified from the sound recognition result, on the basis of the suitability degree.

10. The information processing device according to claim 7, wherein the processing unit determines whether or not to permit a transmission operation of information addressed to another user specified from the sound recognition result, on the basis of the suitability degree.

11. The information processing device according to claim 7,
wherein, in a case where the suitability degree is equal to or less than a first threshold value and is greater than a second threshold value, the processing unit inquires of the user whether or not to execute the operation specified from the sound recognition result, and
the processing unit determines whether or not to permit the operation on a basis of a response of the user in response to the inquiry.

12. An information processing device comprising:
an acquisition unit configured to acquire a sound collected by a sound collection unit; and
a processing unit configured to perform processing corresponding to a suitability degree calculated on a basis of the sound acquired by the acquisition unit.

13. The information processing device according to claim 12, further comprising:
a suitability degree calculation unit configured to calculate the suitability degree on a basis of a sound recognition of the sound acquired by the acquisition unit,
wherein the processing unit performs processing corresponding to the suitability degree calculated by the suitability degree calculation unit.

14. The information processing device according to claim 13, further comprising:
a control information generation unit configured to generate control information for changing a position of the sound collection unit on a basis of the suitability degree,
wherein the processing unit outputs the control information generated by the control information generation unit.

15. The information processing device according to claim 14, wherein the control information generation unit determines whether or not to generate the control information on a basis of a comparison between the suitability degree and a predetermined threshold value.

16. The information processing device according to claim 14, wherein the control information generation unit further generates the control information on a basis of a history of change of the position of the sound collection unit.

17. The information processing device according to claim 14,
wherein the acquisition unit further acquires information regarding an apparatus including the sound collection unit, and
the control information generation unit further generates the control information on a basis of the information regarding the apparatus acquired by the acquisition unit.

18. The information processing device according to claim 13, wherein the processing unit causes a communication unit to transmit the suitability degree to an apparatus including the sound collection unit.

19. An information processing method comprising:
acquiring a suitability degree calculated on a basis of a sound collected by a sound collection unit; and
performing processing on a basis of the acquired suitability degree, with a processor.

20. A program that causes a computer to function as:
an acquisition unit configured to acquire a suitability degree calculated on a basis of a sound collected by a sound collection unit; and
a processing unit configured to perform processing on a basis of the suitability degree acquired by the acquisition unit.
